(19) **Europäisches Patentamt European Patent Office Office européen des brevets**

(11) **EP 4 313 587 B1**

(12) **FASCICULE DE BREVET EUROPEEN**

(45) Date de publication et mention de la délivrance du brevet:
**12.02.2025 Bulletin 2025/07**

(21) Numéro de dépôt: **22717645.0**

(22) Date de dépôt: **30.03.2022**

(51) Classification Internationale des Brevets (IPC):
**B32B 17/10** (2006.01)    **C03C 4/10** (2006.01)
**B60J 1/02** (2006.01)

(52) Classification Coopérative des Brevets (CPC):
**B32B 17/10036; B32B 17/10174; B32B 17/10201; B32B 17/1022; B32B 17/10348; B32B 17/10449; B32B 17/10761; G01S 7/497; G01S 17/931; G01S 2007/4977**

(86) Numéro de dépôt international:
**PCT/FR2022/050599**

(87) Numéro de publication internationale:
**WO 2022/208025 (06.10.2022 Gazette 2022/40)**

(54) **VITRAGE DE VEHICULE ET DISPOSITIF AVEC SYSTEME DE DETECTION PROCHE INFRAROUGE ASSOCIE**

FAHRZEUGVERGLASUNG UND VORRICHTUNG MIT ZUGEHÖRIGEM NAHINFRAROTDETEKTIONSSYSTEM

VEHICLE GLAZING AND DEVICE HAVING AN ASSOCIATED NEAR-INFRARED DETECTION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.03.2021 FR 2103349**

(43) Date de publication de la demande:
**07.02.2024 Bulletin 2024/06**

(73) Titulaire: **Saint-Gobain Glass France 92400 Courbevoie (FR)**

(72) Inventeurs:
• **ABADIE, Sacha 75019 PARIS (FR)**
• **DIGUET, Antoine 75009 PARIS (FR)**

(74) Mandataire: **Saint-Gobain Recherche 41 Quai Lucien Lefranc 93300 Aubervilliers (FR)**

(56) Documents cités:
**WO-A1-2021/053138    CN-A- 111 409 314**

**Description**

L'invention se rapporte à un vitrage, en particulier un pare-brise, dans un véhicule notamment routier, de train en association avec un système de détection dans le proche infrarouge. L'invention décrit un dispositif combinant ledit vitrage et le système de détection infrarouge.

Les vitrages pour véhicules autonomes et la technologie associée évoluent constamment, notamment pour améliorer la sécurité.

La télédétection par laser ou LIDAR, acronyme de l'expression en langue anglaise « light detection and ranging » ou « laser detection and ranging » (soit en français « détection et estimation de la distance par la lumière » ou « par laser ») est utilisable dans des véhicules autonomes au niveau des phares. WO 2021/053138 A1 divulgue un vitrage de véhicule, comportant une première feuille de verre, au moins une première zone dudit vitrage étant transparente à une longueur d'onde dite de travail dans l'infrarouge dans une gamme allant de 800nm à 1800nm. Le vitrage comporte un revêtement chauffant. Dans la zone de transmission infrarouge, le vitrage présente une transmission totale infrarouge d'au moins 70% à la longueur d'onde de travail.

Plus récemment la demande de brevet WO20180153012 propose de placer un LIDAR fonctionnant dans le proche infrarouge entre 750nm et 1050nm derrière le pare-brise feuilleté comportant deux feuilles de verre extraclair et un filtre infrarouge.

Les performances de ce dispositif de vision (vitrage associé au LIDAR) peuvent être améliorées.

Pour ce faire, la présente invention se rapporte à un vitrage (bombé) de véhicule notamment routier (voiture, camion, transport en commun: bus, car etc) ou ferroviaire (en particulier à vitesse maximale d'au plus 90km/h ou d'au plus 70km/h, en particulier les métros, tramway), notamment bombé, en particulier un pare-brise (feuilleté), ou encore une lunette arrière (monolithique éventuellement trempé ou feuilleté), voire un vitrage latéral (monolithique éventuellement trempé ou feuilleté) voire un toit, d'épaisseur E1 donnée par exemple subcentimétrique notamment d'au plus 9mm ou 7mm ou 5mm en particulier pour un pare-brise de véhicule routier, vitrage notamment feuilleté comportant :

- un première feuille de verre, notamment bombée, destinée à être le vitrage extérieur, avec une première face principale externe F1 et une deuxième face principale interne F2 orientée vers l'habitacle, si véhicule automobile d'épaisseur de préférence d'au plus 4mm, et même d'au plus 3mm ou 2,5mm, - notamment 2,1mm, 1,9mm, 1,8mm, 1,6mm et 1,4mm- et de préférence d'au moins 0,7mm ou 1mm, la deuxième feuille de verre notamment à base de silice, sodocalcique, de préférence silicosodocalcique, voire aluminosilicate, ou borosilicate, première feuille de verre qui présente de préférence une teneur pondérale en oxyde de fer total (exprimé sous la forme $Fe_2O_3$) d'au plus 0,05%
- de préférence un intercalaire de feuilletage (mono ou multifeuillet), éventuellement neutre, clair, extraclair ou teinté notamment gris ou vert, en matière polymère de préférence thermoplastique et mieux encore en polyvinylbutyral (PVB de préférence avec des plastifiants), de préférence si véhicule routier d'épaisseur d'au plus 1,8mm, mieux d'au plus 1,2mm et même d'au plus 0,9mm (et mieux d'au moins 0,3mm et même d'au moins 0,6mm), l'intercalaire de feuilletage étant éventuellement acoustique et/ou ayant éventuellement une section transversale diminuant en forme en coin du haut vers le bas du vitrage feuilleté (en particulier un parebrise) pour un affichage tête haute (HUD pour Head Up Display en anglais), intercalaire de feuilletage avec une face principale Fa orienté vers F2 et avec une face principale Fb opposée à Fa
- de préférence une deuxième feuille de verre destinée à être le vitrage intérieur, de préférence bombée et en particulier teintée (si avec trou traversant), avec une troisième face principale F3 côté F2 et une quatrième face principale F4 interne orientée vers l'habitacle, si véhicule routier d'épaisseur de préférence inférieure à celle du premier vitrage, même d'au plus 3mm ou 2mm - notamment 1,9mm, 1,8mm, 1,6mm et 1,4mm- ou même d'au plus 1,3mm, et de préférence d'au moins 0,7mm, l'épaisseur des première et deuxième feuilles de verres étant de préférence strictement inférieure à 5 ou 4mm, même à 3,7mm, la deuxième feuille de verre notamment à base de silice, sodocalcique, de préférence silicosodocalcique, voire aluminosilicate, ou borosilicate.

Au moins une première zone, dite zone de transmission infrarouge, notamment centimétrique, par exemple de plus petite dimension d'au moins 3cm et de plus grande dimension d'au plus 70cm, dudit vitrage selon l'invention est transparente à une longueur d'onde dite de travail dans l'infrarouge dans une gamme allant de 800nm à 1800nm notamment 905nm±30nm et/ou 1550nm±30nm (pour Lidar) ou même en particulier de 800nm à 1700nm ou 1200nm (pour les caméras proche infrarouge). Par exemple la zone de transmission infrarouge peut être de hauteur d'au plus 30cm (et au moins centimétrique, et même d'au moins 3 ou 5cm) et de longueur d'au plus 70cm ou 50cm (et au moins centimétrique, et même d'au moins 3cm ou 5cm ou 10cm).

Dans ladite zone de transmission infrarouge, le vitrage selon l'invention comportant à l'opposé de la face F1 (c'est-à-dire côté face F2) un revêtement chauffant comportant une couche chauffante en matériau électroconducteur transparent (autrement dit TCO pour transparent conductive oxyde en anglais) à ladite longueur d'onde dite de travail, (formant ainsi zone de chauffage au moins locale), de préférence alimenté avec au moins deux amenées de courant, en particulier connecteur(s) plat(s) ou deux bus bars (locaux) notamment disposés sur deux côtés opposés du revêtement de préférence les deux côtés les plus proches de la couche (par exemple la hauteur de la couche chauffante), de préférence masqués de l'extérieur (par couche opaque éventuellement de camouflage)

Le matériau électroconducteur selon l'invention est un oxyde transparent conducteur comportant un oxyde d'indium et (au moins notamment un seul) un autre métal choisi parmi le molybdène et le titane, autre métal éventuellement à l'état oxydé (en particulier oxyde de titane). On peut désigner l'oxyde d'indium et de molybdène par IMO et l'oxyde d'indium et titane par ITiO.

Dans la zone de transmission infrarouge avec le revêtement chauffant, le vitrage selon l'invention présente :

- une transmission infrarouge d'au moins 70% ou 75%, 80% ou 85% à la longueur d'onde de travail notamment 905 ±30nm et/ou 1550±30nm (pour un LIDAR) notamment mesurée à l'angle d'incidence de 0° (autrement dit à 90° par rapport au plan local du vitrage) voire même également de préférence avec une transmission totale d'au moins 70% ou 75% ou 80% mesurée à un angle d'incidence de 60°
- et même avec un flou d'au plus 2% ou 1%.

Par la couche chauffante on préserve du givre et/ou de la buée cette zone de transmission.

Pour les vitrages de véhicules, notamment le parebrise, il est connu d'utiliser comme couche chauffante transparente dans le visible un empilement de couches à l'argent au sein du vitrage feuilleté couvrant tout le vitrage.

Par ailleurs, on emploie parfois comme couche de basse émissivité, notamment dans les toits de véhicule en face libre côté habitacle, un empilement avec l'oxyde mixte d'indium et d'étain (ITO).

Toutefois l'empilement à l'argent ou même à l'ITO ne transmet pas suffisamment les proches infrarouges.

L'IMO et l'ITiO selon l'invention sont des matériaux particulièrement transparents et suffisamment conducteurs pour la fonction de chauffe.

La couche chauffante (et même le revêtement chauffant) peut être pleine ou présenter une ou des discontinuités par exemple ligne(s) (de largeur submillimétrique) notamment la zone de chauffe peut être en plusieurs sous zones (chacune avec deux bus bars sur deux côtés opposés de la couche, notamment les deux côtés les plus proches).

Dans une configuration, la couche chauffante (et même le revêtement chauffant) est locale et ne dépasse pas notablement de la zone de transmission aux infrarouges au moins à la longueur d'onde de travail. La couche chauffante de préférence dépasse d'au moins 5mm et par exemple d'au plus 50mm ou 20mm de la zone de transmission infrarouge pour que les deux bus-bars soient décalés de la zone de transmission aux infrarouges (par exemple bus-bars sous la face F3, décalés d'un trou traversant, de part et d'autre du trou traversant).

Le vitrage peut comprendre une autre couche de chauffage locale disjointe de la couche de chauffage (choisie locale) en matériau et/ou épaisseur et/ou surface identique ou similaire.

La couche de chauffage peut aussi s'étendre pour couvrir une autre zone de transmission notamment infrarouge adjacente à ladite zone de transmission infrarouge. L'invention convient tout particulièrement pour les vitrages (parebrise, lunette etc) aux véhicules autonomes ou semi autonomes : niveau L2+, L3, L4 et L5 (« full » autonome) ainsi que les véhicules type Robot Taxi et navette (Shuttle) etc.

L'angle du vitrage, notamment un pare-brise de véhicule routier, peut être typiquement entre 21° et 36° par rapport au sol et en moyenne de 30°.

L'invention convient pour former une zone de transmission proche infrarouge pour un LIDAR ou une caméra proche infrarouge (SWIR pour « short wave infrared » en anglais) Le revêtement chauffant est notamment sur un substrat (notamment verrier et de préférence extraclair) choisi parmi :

- la première feuille de verre, sur la face F2 (nue ou revêtue d'un revêtement fonctionnel) le vitrage étant monolithique en particulier vitre latéral ou lunette arrière.
- ou le vitrage étant feuilleté et comprenant côté face F2 un intercalaire de feuilletage et une deuxième feuille de verre:

  - (première configuration de vitrage feuilleté) la deuxième feuille de verre, de préférence sur une face principale F3 de la deuxième feuille de verre en vis-à-vis de la face F2, deuxième feuille de verre transparente à la longueur d'onde de travail notamment en verre extraclair
  - (deuxième configuration de vitrage feuilleté) une pièce transparente à la longueur d'onde de travail, sur une face principale de la pièce de préférence en vis-à-vis de la face F2, qui est dans (et même en partie sous) un trou traversant de la deuxième feuille de verre, notamment teintée, dans la zone de transmission infrarouge, en particulier pièce sur l'intercalaire de feuilletage (dépassant ou non sous le trou traversant de la deuxième feuille) ou collée sur la face F2 nue ou revêtue d'un revêtement fonctionnel), l'intercalaire de feuilletage étant trouée par un trou traversant d'intercalaire au droit dudit trou traversant.
  - la première feuille de verre, sur la face F2 (nue ou revêtue d'un revêtement fonctionnel), l'intercalaire de feuilletage étant éventuellement troué par un trou traversant d'intercalaire au droit d'un trou traversant de la deuxième feuille de verre (dans la zone de transmission infrarouge), (dite troisième configuration du vitrage feuilleté)

- un film (polymère ou minéral ou hybride), notamment submillimétrique, au sein de l'intercalaire de feuilletage, transparent à la longueur d'onde de travail, film éventuellement dépassant tout ou partie de la zone de transmission infrarouge (dépassant d'un trou traversant dans la deuxième feuille de verre notamment teintée en particulier avec une pièce dans le trou traversant), (dite quatrième configuration du vitrage feuilleté).Le film (porteur du revêtement chauffant) peut être en verre notamment extraclair et/ou trempé (après le dépôt de la couche chauffante -dudit revêtement chauffant- de préférence) en particulier d'épaisseur d'au plus 0,3mm ou 0,2mm.

Le film peut donc être un verre ultra mince (ultrathin glass en anglais ou UTG).

Le film polymère peut être en polyamide, polyester, polyoléfine (PE : polyéthylène, PP: polypropylène), polystyrène, polyvinyle chloride (PVC), poly téréphtalate d'éthylène (PET), polyméthacrylate de méthyle (PMMA), polycarbonate (PC). On préfère un film PET. Le film polymère peut être d'une épaisseur comprise entre 10 et 100 ou 200$\mu$mLe film notamment flexible (UTG etc) peut s'adapter à la courbure du vitrage (bombé). Dans la deuxième configuration de vitrage feuilleté, on ajoute cette pièce selon l'invention dans le trou traversant pour améliorer la sécurité. Ainsi dans cette configuration selon l'invention, pour atteindre un niveau élevé de transmission on sélectionne pour le vitrage feuilleté:

1) un verre extérieur extraclair dans le proche infrarouge visé,
2) un verre intérieur plus absorbant dans le proche infrarouge visé que le verre extérieur et nécessairement évidé.

Cette solution évite l'usage d'un deuxième verre extraclair, elle améliore le confort (chaleur dans le véhicule), l'esthétique et est plus économique.

En particulier, le trou traversant est débouchant sur ledit bord ou ladite tranche longitudinale supérieure ou est fermé (entouré par la paroi de verre de la deuxième feuille) notamment à proximité de la tranche longitudinale supérieure.

La pièce peut être un verre notamment extraclair et/ou trempé en particulier la couche chauffante (et même le revêtement chauffant) est également trempée ou recuite.

Dans une configuration, la couche chauffante (et même le revêtement chauffant) est locale mais s'étend suffisamment pour couvrir une zone de transmission dans le visible adjacente (à côté de) la zone de transmission infrarouge, par exemple d'un ou d'autres détecteurs, capteurs : caméra visible, capteurs d'humidité, capteur de pluie, de lumière (photodiode), capteur formant antenne pour recevoir et/ou transmettre des ondes électromagnétiques (radio, TV notamment réseau local de communication comme le BLUETOOTH, le WIFI, le WLAN), un capteur acoustique (à base d'un élément piézoélectrique), un détecteur de signal ultrasonore, un capteur de diagnostic, un détecteur de commande (essuie-glace, etc). En particulier le substrat qui est un film (UTG etc) dépassant tout ou partie de la zone de transmission infrarouge peut être porteur de capteur(s), détecteur, antenne.

La transmission totale dans l'infrarouge est mesurée par exemple avec un spectrophotomètre tel que le Lamba 900 de Perkin Elmer.

On peut vouloir réduire l'épaisseur autant que possible pour éviter de pénaliser la transparence (ne pas trop absorber) et même éviter des surépaisseurs (et un surcout inutile).

L'épaisseur de la couche chauffante et même du revêtement chauffant est de préférence d'au plus d'au plus 300m et mieux d'au plus 150nm. De préférence l'épaisseur de la couche chauffante est d'au moins 2 ou 5nm.

On peut vouloir réduire la résistivité de la couche chauffante pour éviter de devoir appliquer un fort voltage.

La résistivité de la couche chauffante est de préférence d'au plus 500 ou 450$\mu$ohm.cm ou 300$\mu$ohm.cm ou même d'au plus 250$\mu$ohm.cm.

Par ailleurs, la résistance par carré du revêtement chauffant peut être d'au plus 500, 300 ou 100 ohm/carré ou même d'au plus 50 ou 30 ohm/carré.

La tension appliquée à la couche chauffante (au revêtement chauffant), via au moins deux bus bars sur deux côtés opposés notamment, peut être d'au plus 400 V, en particulier de 100V à 400V pour les véhicules électriques (notamment 110V et 220V). La tension peut être d'au plus 80V en particulier 12V, 24V, 15V ou 48V.

La couche chauffante (le système de chauffe) peut être définie par une puissance surfacique d'au moins 100, 200 ou 300W/m$^2$ et d'au plus 2000 W/m$^2$ ou 1000 W/m$^2$ de préférence de 200 à 700 W/m$^2$ (cela dépend aussi de la vitesse souhaitée pour désembuage ou le dégivrage) en particulier avec une tension appliquée qui est d'au plus 400V et même d'au plus 120V ou 50V.

Le revêtement chauffant, et même la zone de transmission infrarouge en particulier, peut être dénué de couche métallique absorbant et/ou réfléchissant le proche infra-rouge à la longueur d'onde de travail (ou au moins d'épaisseur d'au plus 10nm ou 5nm ou 3nm). De préférence pour la couche chauffante:

- le pourcentage en poids d'oxyde d'indium est d'au moins 90% du poids total (de la couche chauffante) et de préférence d'au moins 92% ou 95% et de préférence d'au plus 98%,
- le pourcentage en poids du molybdène et/ou d'oxyde de molybdène, de titane et/ou d'oxyde de titane est de préférence d'au moins 2% et de préférence d'au plus 10% ou 5% ou 4% ou 3%.

En particulier la somme en poids d'indium et de titane (notamment oxydé) et/ou du molybdène (oxydé et/ou métallique) est d'au moins 99% ou 100% en poids total (de la couche chauffante).

Le revêtement chauffant peut comporter un empilement de couches suivant : une sous couche d'oxy et/ou nitrure de métal ou de silicium sous jacente à la couche chauffante, et/ou une sur couche d'oxy et/ou nitrure de métal ou de silicium sur la couche chauffante. On peut en effet disposer une sous-couche, ou des sous-couches, de neutralisation. Dans le cas d'une couche unique, son indice de réfraction est de préférence compris entre l'indice de réfraction du substrat (verrier par exemple) porteur du revêtement chauffant et l'indice de réfraction de ladite couche chauffante. De telles couches ou empilements de couches permettent d'influer sur l'aspect en réflexion du vitrage, notamment sur sa couleur en réflexion. A titre d'exemples non limitatifs, il est possible d'utiliser une couche d'oxyde mixte de silicium et d'étain ($SiSnO_x$), d'oxycarbure ou d'oxynitrure de silicium, d'oxyde d'aluminium, d'oxyde mixte de titane et de silicium. Un empilement de couches possibles comprend deux couches à haut et bas indice, par exemple un empilement $TiO_2/SiO_2$, $Si_3N_4/SiO_2$. L'épaisseur géométrique de cette ou de ces couches est de préférence comprise dans un domaine allant de 15 à 70 nm. On dispose de préférence sous cette couche une couche de neutralisation en un oxynitrure de silicium ou un empilement $Si_3N_4/SiO_2$.

En particulier il est préférable de disposer entre le substrat et la couche chauffante ou empilement de neutralisation une couche d'adhésion. Cette couche, qui présente avantageusement un indice de réfraction proche de celui du substrat choisi verrier (par exemple film UTG ou pièce en verre), permet d'améliorer la tenue à la trempe en favorisant l'accrochage de la couche de neutralisation. La couche d'adhésion est de préférence en silice. Son épaisseur géométrique est de préférence comprise dans un domaine allant de 20 à 200 nm, notamment de 30 à 150 nm.

Les différents modes de réalisation préférés décrits ci-avant peuvent bien entendu être combinés entre eux. Toutes les combinaisons possibles ne sont bien entendu pas explicitement décrites dans le présent texte. Quelques exemples d'empilements pour le revêtement chauffant particulièrement préférés sont donnés ci-après sur un substrat verrier (UTG ou encore pièce ou encore première ou deuxième feuille de verre) en particulier:

- SiOC / couche chauffante / $SiO_2$ (/ $TiO_2$)
- $SiSnO_x$ / couche chauffante / $SiO_2$ (/ $TiO_2$)
- ($SiO_2$) / $SiO_xN_y$ / couche chauffante / $Si_3N_4$ / $SiO_2$ / $TiO_2$
- $SiO_2$ / $Si_3N_4$ / $SiO_2$ / couche chauffante / $Si_3N_4$ / $SiO_2$ / $TiO_2$
- $Si_3N_4$ / $SiO_2$ / couche chauffante / $Si_3N_4$ / $SiO_2$ / $TiO_2$.

Selon un mode de réalisation, la couche chauffante est obtenue par dépôt en voie liquide ou par dépôt par voie chimique.

Selon un mode de réalisation préféré, les couches du revêtement chauffant sont obtenues par pulvérisation cathodique, notamment assistée par un champ magnétique (procédé magnétron), réactive ou non (gaz neutre et/ou oxygène).

L'avantage majeur de ce procédé réside dans la possibilité de déposer sur une même ligne un empilement très complexe de couches en faisant successivement défiler le substrat sous différentes cibles, ce généralement dans un seul et même dispositif.

Il est plus aisé dans le cas d'un dépôt magnétron de réaliser la couche de chauffage (locale) sur un film (UTG etc) que sur la face F2 ou F3.

Par exemple pour l'IMO on choisit une cible d'oxyde d'indium (98% en poids) et de molybdène (2% en poids), le gaz peut être neutre comme de l'argon, de l'oxygène ou un mélange argon oxygène (majoritaire en argon par exemple). Le substrat peut être chauffé ou non pendant le dépôt

Par exemple pour l'ITiO on choisit une cible d'oxyde d'indium (98% en poids) et de d'oxyde de titane (2% en poids), le gaz peut être neutre comme de l'argon, de l'oxygène ou un mélange argon oxygène (majoritaire en argon par exemple). Le substrat peut être chauffé ou non pendant le dépôt.

Des traces d'argon peuvent être présentes dans la couche chauffante.

Pour augmenter la conductivité électrique un traitement thermique postérieur au dépôt est envisageable Ce traitement thermique est de préférence choisi parmi les traitements de trempe, de recuit, de recuit rapide.

Le traitement de trempe ou de recuit est généralement mis en œuvre dans un four, respectivement de trempe ou de recuisson. L'intégralité du substrat minéral choisi de préférence verrier, est portée à une température élevée, d'au moins 300°C dans le cas de la recuisson (en particulier pendant au moins 30 min), et d'au moins 500°C, voire 600°C, dans le cas d'une trempe (notamment d'un bombage trempe).

Le recuit rapide est de préférence mis en œuvre à l'aide d'une flamme, d'une torche plasma ou d'un rayonnement laser. Dans ce type de procédé, on vient créer un mouvement relatif entre le substrat et le dispositif (flamme, laser, torche plasma). Généralement, le dispositif est mobile, et le substrat revêtu du revêtement chauffant vient défiler au regard du dispositif de manière à traiter sa surface. Ces procédés permettent d'apporter une grande densité d'énergie au revêtement à traiter en un temps très faible, limitant ainsi la diffusion de la chaleur vers le substrat, et donc le chauffage dudit substrat. La température du substrat est généralement d'au plus 100°C, voire 50° et même 30°C pendant le traitement. Chaque point de la couche mince est soumis au traitement de recuit rapide pendant une durée généralement inférieure ou égale à 1 seconde, voire 0,5 seconde.

La couche chauffante peut présenter au moins deux bus bars (locaux) de préférence sur deux côtés opposés de la couche chauffante (et même les côtés les plus proches notamment bus bars horizontaux) masqués de l'extérieur notamment par :

- une couche de masquage opaque dans le visible et à la longueur d'onde de travail, décalée de la zone de transmission infrarouge au moins d'une région centrale, (les bus bars étant décalés également de la zone centrale de transmission infrarouge)
- et/ou par un filtre sélectif de camouflage, opaque dans le visible et transparent à la longueur d'onde de travail, de préférence dans la zone de transmission infrarouge et éventuellement dépassant de ladite zone de transmission infrarouge, notamment un revêtement de camouflage sur la face F2, plus vers l'extérieur que les bus bars les deux bus bars étant de préférence décalés de la zone de transmission infrarouge au moins dans la région zone centrale.

On peut choisir de placer les deux bus bars sur les côtés les plus proches notamment bus bars horizontaux. On peut préférer toutefois de bus bars latéraux verticaux ou obliques (parallèles par rapport aux petits côtés de la zone de transmission infrarouge, d'un trou traversant etc) car les bus bars horizontaux peuvent générer des surépaisseurs locales favorisant les distorsions.

La couche chauffante peut présenter au moins deux bus bars (locaux) de préférence sur deux côtés opposés de la couche chauffante, décalés de la zone de transmission infrarouge, notamment lorsque le vitrage est feuilleté et comprenant côté face F2 un intercalaire de feuilletage et une deuxième feuille de verre qui éventuellement est trouée dans la zone de transmission infrarouge, les bus bars (locaux) sont sous la deuxième feuille de verre notamment décalés du trou traversant

Les bus bars (locaux) sont en forme de bande notamment rectangulaires qui sont (au moins en partie) hors de la zone du trou traversant

La largeur des bus bars (locaux) est de préférence de 2mm à 30mm, de manière particulièrement préférée de 4mm à 20mm et en particulier de 10mm à 20mm.

Un busbar (local) notamment en couche (imprimé) contient de préférence au moins un métal, un alliage métallique, un composé métallique et/ou de carbone, en particulier de préférence un métal noble et, en particulier, de l'argent. Par exemple, la pâte d'impression contient de préférence des particules métalliques, des particules métalliques et / ou de carbone et, en particulier des particules de métal noble tel que des particules d'argent. L'épaisseur d'un bus bar en couche (imprimé) peut être de préférence de $5\mu m$ à $40\mu m$, de manière particulièrement préférée de $8\mu m$ à $20\mu m$ et plus particulièrement de préférence de $8\mu m$ à $1\ \mu m$.

En variante, cependant, on peut utiliser pour un ou chaque bus bar (local) une feuille électriquement conductrice, notamment une bande, par exemple rectangulaire. Le busbar contient alors, par exemple, au moins l'aluminium, le cuivre, le cuivre étamé, l'or, l'argent, le zinc, le tungstène et / ou de l'étain ou des alliages de ceux-ci. Ce bus bar en feuille (bande) a de préférence une épaisseur de $10\mu m$ à $500\mu m$, de manière particulièrement préférée de $30\mu m$ à $300\mu m$.

On peut en particulier avoir :

- une éventuelle zone de chauffage principale avec au moins deux amenées de courant typiquement en zone périphérique du vitrage (sur un même bord, sur deux bords opposés ou encore deux bords adjacents du vitrage), par exemple par un revêtement électroconducteur chauffant (troué au droit du trou traversant)
- la zone de chauffage locale avec au moins deux amenées de courant ou bus bar (barre « omnibus ») locaux, premier et deuxième bus bars de préférence masqués de l'extérieur comme précité.

Le premier bus bar est de préférence (sensiblement) horizontal et le plus proche du bord longitudinal supérieur du vitrage et le deuxième bus bar est alors de préférence (sensiblement) horizontal, premier et deuxième bus bar de part et d'autre du trou traversant éventuel par exemple.

On adapte à façon la longueur des bus bar

L'alimentation électrique des (premier, deuxième) bus bars peut être faire sans connectique, fil ('wireless' en anglais) et/ou avec un connecteur (fils, connecteurs plats etc).

Dans la zone de transmission infrarouge avec le revêtement chauffant, le vitrage peut comporter côté face F2 (côté opposé à face F1) un filtre sélectif de camouflage, absorbant dans le visible et transparent à la longueur d'onde de travail, le vitrage présentant alors une transmission totale d'au plus 10,0%, 5,0%, ou 1,0% ou 0,5% dans le visible notamment au moins à une valeur de référence dans une gamme de 400nm à 700nm

Le filtre sélectif est par exemple un revêtement de camouflage sur la face F2 ou, le vitrage étant feuilleté et comprenant côté face F2 un intercalaire de feuilletage et une deuxième feuille de verre avec une face principale F3 orienté vers la face F2 et une face F4 orientée vers l'habitacle, le revêtement de camouflage sur un film submilllimétrique au sein de l'intercalaire de feuilletage, et même le filtre sélectif sur la face F2 ou sur le film dépasse sous la face F3 . Le revêtement chauffant est notamment distant de la face F2, éventuellement sur ledit film submilllimétrique au sein de l'intercalaire de feuilletage avec éventuellement le revêtement de camouflage

En particulier, le filtre sélectif est un revêtement de camouflage sur la face F2 ou sur un film (notamment UTG, polymère) sous la face F3 au sein de l'intercalaire de feuilletage de préférence dépassant de la zone de transmission infrarouge et le revêtement chauffant est de préférence distant de la face F2 éventuellement sur un film submilllimétrique au sein de l'intercalaire de feuilletage avec éventuellement le revêtement de camouflage.

Le revêtement de camouflage peut être sur la même face principale que le revêtement chauffant par exemple sous jacent pour favoriser la prise de contact électrique au niveau des bus bars.

Le revêtement de camouflage peut être sur une face principale opposée au revêtement chauffant en particulier revêtement de camouflage orienté côté face F2 et revêtement chauffant orienté côté face F3.

Dans une réalisation, le filtre sélectif notamment revêtement de camouflage comporte une matrice (organique, polymérique, minérale ou hybride) et un agent colorant dispersé dans ladite matrice, ledit agent colorant absorbant (sensiblement la totalité de) la lumière située dans ledit domaine du visible et étant (sensiblement) transparent à ladite longueur de travail, revêtement de camouflage formant dans la zone de transmission infrarouge le revêtement de camouflage déjà décrit:

- sur la face F2
- ou sur l'intercalaire de feuilletage côté face FA ou FB, de préférence en PVB, en particulier encre comportant en outre des particules PVB
- ou sur un film polymère (transparent dans le visible et à la longueur d'onde de travail) notamment PET en contact adhésif ou collé à F2 ou en contact adhésif ou collé à la pièce, d'épaisseur d'au plus 0,3mm, de préférence liée à la face F2.

Le revêtement de camouflage peut être d'épaisseur submillimétrique et même d'au plus 20$\mu$m.

Le revêtement de camouflage peut être polymérique, ou hybride organique minérale. La matrice polymérique de la couche colorante est choisie notamment parmi des monomères, des oligomères, ou des polymères comprenant au moins une fonction méthacrylate, des époxydes, des vernis constitués de particules dispersées de PVB, latex, polyuréthane ou acrylate.

Le revêtement de camouflage peut contenir tout pigment ou colorant possédant une transmittance dans l'infrarouge plus élevée que sa transmittance dans le visible comme une encre noire proche infrarouge qui absorbe substantiellement les longueurs d'ondes dans le visibles en transmettant celles dans le proche infrarouge. Par exemple, le revêtement de camouflage peut contenir des colorants ou encres comme les encres SpectreTM, par exemple SpectreTM 100, 110, 120, 130, 140, 150, ou 160 (Epolin, Newark, NJ); les encres Mimaki, par exemple Mimaki ES3, SS21, BS3, SS2, ou HS (Mimaki Global, Tomi-city, Nagano, Japan); ou les encres Seiko, par exemple Seiko 1000, 1300, SG700, SG740, ou VIC (Seiko Advance Ltd., Japan) ou encore encre noire IR9508 de MingBo anti Forgery Technology Co ltd

Le revêtement de camouflage peut contenir un ou plusieurs composants de colorant noir, cyan, magenta ou jaune

Le revêtement de camouflage peut inclure des colorants ou pigments ou les deux. La couche colorante peut inclure Lumogen® Black FK 4280 ou Lumogen® Black FK 4281 (BASF, Southfield, MI).

De préférence dans le revêtement de camouflage:

- l'agent colorant est choisi parmi le Sudan Black B®ou la Nigrosine Solvent black 5, et de préférence est le Sudan Black B®
- l'agent colorant représente entre 0,1 et 10% poids de la couche, de préférence entre 0,2 et 3% poids de la couche.

Le revêtement de camouflage peut être un vernis moins de 30$\mu$m.

Pour le revêtement de camouflage, on peut jouer sur l'épaisseur de couche ou sur le pourcentage massique d'agent colorant, en particulier au moins de 1%, 5% à 20%, 30%. Le filtre sélectif peut être un film polymère coloré (opaque en masse) (au sein du feuilletage) ou avec un revêtement de camouflage collé ou en contact adhésif avec la face F2.

Le filtre sélectif peut comprendre un film polymère coloré (opaque en masse) tel que de PET chargé dans sa masse en colorants par procédé de 'deep-dyeing' (teinture) en « roll-to-roll » ou rouleau à rouleau, notamment immersion dans un bain chaud avec les colorants. La concentration finale en colorant doit être suffisante pour apporter l'opacité dans le visible. On peut se référer au brevet WO9307329 ou US5162046.

On peut sur un film polymère (transparente ou coloré) tel que PET mettre une couche colorante par face principale.

On peut combiner un film polymère tel que PET teinté en masse et une couche colorante sur ce film, un autre film polymère tel que PET, sur le PVB restant en face dudit trou traversant ou sur la face F2.

On peut prévoir différentes étendues pour le filtre sélectif, notamment revêtement de camouflage, sous la face F3 et notamment espacé de la pièce :

- le filtre sélectif s'étend sous la face F3 au-delà de la fenêtre de transmission infrarouge (dudit trou traversant), de l'extérieur prolonge une couche de masquage ou masque une épargne d'une couche de masquage périphérique,
- le filtre sélectif s'étend sous la face F3 au-delà de la fenêtre de transmission infrarouge (dudit trou traversant), notamment de l'extérieur prolonge une couche de masquage ou masque une épargne d'une couche de masquage périphérique, le filtre sélectif présente au moins une ouverture ou discontinuité locale pour laisser passer les rayons lumineux notamment pour au moins un capteur additionnel en particulier capteur d'une caméra visible ou caméra thermique, en particulier caméra fixée à une platine en face F4 trouée pour laisser passer lesdits rayons lumineux ou électromagnétiques (caméra thermique).

Le filtre sélectif, notamment revêtement de camouflage, peut dépasser au-delà de la zone de transmission infrarouge par exemple d'au plus 50mm ou mieux d'au plus 20mm entre la face F2 et la face F3

Le filtre sélectif, notamment revêtement de camouflage, peut être défini par un L*1, a*1 b*1, définie dans l'espace chromatique L*a*b* CIE 1976. La couche de masquage de couleur C1 aussi est définie par un L*2, a*2 b*2 avec un écart colorimétrique ΔE* donné par la formule suivante :

$$\Delta E^* = \sqrt{(\Delta L^{*2} + \Delta a^{*2} + \Delta b^{*2})}.$$

De préférence ΔE*<4, mieux ΔE*<2 (l'œil humain discerne difficilement), encore mieux ΔE*<1 (l'œil humain ne discerne pas).

Dans une réalisation, le vitrage comporte, notamment sur la face F2 ou, le vitrage étant feuilleté et comprenant côté face F2 un intercalaire de feuilletage et une deuxième feuille de verre avec une face principale F3 orienté vers la face F2 et une face F4 orientée vers l'habitacle, la couche fonctionnelle est sur F3 ou F4. La couche fonctionnelle s'étendant sur toute ou partie du vitrage, notamment couche électroconductrice transparente, éventuellement chauffante, en particulier un empilement à l'argent, en particulier monoargent et/ou réfléchissant la lumière polarisée P, ou encore couche de masquage opaque, notamment un émail, couche fonctionnelle absorbante à ladite longueur d'onde de travail et qui est absente de la zone de transmission infrarouge (notamment dudit trou traversant) au moins dans la zone centrale (notamment dudit trou traversant) et présente en bordure de la zone de transmission infrarouge (notamment du trou traversant entre la face F2 et Fa).

Et éventuellement un revêtement fonctionnel est sur la face F2, transparent à la longueur d'onde de travail, est en regard de la zone de transmission infrarouge (notamment du trou traversant éventuel) étant en contact de ladite couche fonctionnelle qui est sur la face F2, notamment sur ou sous la couche fonctionnelle, notamment revêtement fonctionnel est ledit revêtement chauffant ou un revêtement de camouflage.

La couche fonctionnelle électroconductrice transparente (contrôle solaire et/ou chauffante) peut comporter un empilement de couches minces comprenant au moins une couche fonctionnelle métallique comme d'argent (en F2 ou de préférence F3 ou sur un film polymère). La ou chaque couche fonctionnelle (argent) est disposée entre des couches diélectriques.

Les couches fonctionnelles contiennent de préférence au moins un métal, par exemple, l'argent, l'or, le cuivre, le nickel et le chrome ou, ou d'un alliage métallique. Les couches fonctionnelles en particulier contiennent de préférence au moins 90% en poids .- du métal, en particulier au moins 99,9% en poids .- du métal. Les couches fonctionnelles peuvent être faits de métal pour l'alliage métallique. Les couches fonctionnelles contiennent de façon particulièrement préférée d'argent ou d'un alliage contenant de l'argent. L'épaisseur d'une couche fonctionnelle (argent etc) est de préférence de 5 nm à 50 nm, plus préférentiellement de 8 nm à 25 nm. Une couche diélectrique contient au moins une couche individuelle faite d'un matériau diélectrique, par exemple, contenant un nitrure tel que le nitrure de silicium ou d'un oxyde tel que l'oxyde d'aluminium. La couche diélectrique peut cependant contenir aussi une pluralité de couches individuelles, par exemple, des couches individuelles d'un matériau diélectrique, des couches, des couches de lissage, qui correspond à des couches de blocage et / ou des couches dites antireflets. L'épaisseur d'une couche diélectrique est, par exemple, de 10 nm à 200 nm. Cette structure de couche est généralement obtenue par une succession d'opérations de dépôt qui sont effectuées par un procédé sous vide tel que la pulvérisation cathodique magnétique supporté sur le terrain.

La couche électroconductrice transparente est une couche (monocouche ou multicouches donc empilement) de préférence d'une épaisseur totale inférieure ou égale à $2\mu m$, de manière particulièrement préférée inférieure ou égale $1\mu m$.

Comme exemple d'empilement monoargent réfléchissant la lumière polarisée P» (pour les application d'affichage tête haute pour les pare-brises) on peut citer les exemples dans la demande de brevet WO2021/004685.

Dans la zone de transmission infrarouge avec le revêtement chauffant, le vitrage peut comporter côté face F2 (à l'opposé de la face F1) un élément antireflet à ladite longueur d'onde de travail, le vitrage avec ledit élément antireflet présente une transmission totale d'au moins 75% ou 80% ou 85,0%, ou 90% à la longueur d'onde de travail, notamment $905\pm30nm$ et/ou $1550\pm30nm$ (pour un LIDAR) notamment mesurée à l'angle d'incidence de 0° voire même également de préférence avec une transmission totale d'au moins 75% ou 80% ou 85,0%, mesurée à un angle d'incidence de 60°.

L'élément antireflet peut être un revêtement antireflet ou une surface qui texturée (traitement de surface etc) notamment nanotexturée.

En particulier un revêtement antireflet est plus éloigné de la face F2 que le revêtement chauffant et avec une surface libre côté habitacle.

Le revêtement antireflet peut comporter une sous couche de protection chimique de préférence d'indice de réfraction à 550nm intermédiaire entre l'indice de réfraction n0 à 550nm du substrat et celui n1 à 550nm de la couche antireflet notamment d'épaisseur d'au plus 200nm par exemple, notamment une couche de silice dense, par sol gel surmonté d'une couche fonctionnelle sol gel de silice poreuse.

Le revêtement antireflet peut être sur un substrat (notamment verrier) choisi parmi :

- la première feuille de verre, notamment en verre extraclair, sur la face F2 nue ou revêtue d'un revêtement fonctionnel comme le revêtement chauffant, le vitrage étant monolithique en particulier vitre latéral ou lunette arrière.
- ou lorsque le vitrage est feuilleté et comprend l'intercalaire de feuilletage et la deuxième feuille de verre :

  - la deuxième feuille de verre, notamment en verre extraclair, revêtement antireflet sur la face F4 nue ou revêtue d'un revêtement fonctionnel (comme le revêtement chauffant ou encore sur la face F2 ou F3),
  - ou une pièce , sur la face libre, pièce transparente à ladite longueur d'onde de travail qui est sous et/ou dans un trou traversant (en particulier dans et même en partie sous) de la deuxième feuille de verre (dans la zone de transmission infrarouge) en particulier pièce sur l'intercalaire de feuilletage avec un éventuel trou borgne (pièce dépassant ou non sous le trou traversant) ou collé sur la face F2, l'intercalaire de feuilletage étant troué par un trou traversant d'intercalaire au droit dudit trou traversant,

    - la première feuille de verre, sur la face F2 (nue ou revêtue d'un revêtement fonctionnel comme le revêtement chauffant), l'intercalaire de feuilletage étant troué par un trou traversant d'intercalaire au droit d'un trou traversant de la deuxième feuille de verre (dans la zone de transmission infrarouge)

La zone de transmission infrarouge peut être débouchante sur la tranche du vitrage, et le revêtement chauffant peut être débouchant ou espacé de la tranche du vitrage notamment d'au moins 3cm ou 5cm ou 1cm (pour éviter la corrosion par exemple).

La zone de transmission infrarouge (notamment le trou traversant et/ou le revêtement chauffant et/ou une épargne d'une couche opaque) peut être centimétrique notamment de plus petite dimension d'au moins 3 ou 5cm et de préférence de plus grande dimension d'au plus 70cm ou 50cm.

Par exemple la zone de transmission infrarouge (notamment le trou traversant et/ou le revêtement chauffant et/ou une épargne d'une couche opaque) peut être de hauteur (prise de bord à bord notamment horizontaux sur une surface du vitrage par exemple la première feuille de verre)d'au plus 30cm (et au moins centimétrique, d'au moins 5cm) et de longueur d'au plus 70cm ou 50cm (et au moins centimétrique, d'au moins 5cm ou 10cm).

La zone de transmission infrarouge (notamment le trou traversant et/ou le revêtement chauffant et/ou une épargne d'une couche opaque) peut être notamment de section droite convexe en particulier trapézoïdale de préférence, ou encore circulaire ou ovale ou ellipsoïdale ou encore rectangulaire, carrée...

La zone de transmission infrarouge (notamment d'étendue définie par la surface de la première feuille de verre dans cette zone) peut être :

- fermée, notamment espacée de la tranche du vitrage la plus proche d'au moins 3cm ou 5cm
- débouchante sur la tranche du vitrage.

Il peut y avoir une autre zone de transmission infrarouge (de taille centimétrique), disjointe de ladite zone de transmission infrarouge (notamment de taille et/ou forme similaire à ladite zone de transmission infrarouge), notamment l'une dédiée pour l'émetteur et l'autre pour le récepteur du système de détection infrarouge (Lidar).

Le revêtement chauffant peut être :

- un revêtement chauffant commun à ces deux zones de transmission infrarouge (en particulier si revêtement chauffant sur un film couvrant les deux zones de transmission infrarouge)
- ou encore il y a un revêtement chauffant selon l'invention pour chacune des zones de transmission infrarouge en particulier :

  - deux revêtement chauffants sur deux pièces dans deux trous traversants disjoints de la deuxième feuille de verre
  - ou deux revêtement chauffants disjoints sur un film (polymère, UTG) notamment submillimétrique couvrant les deux zones de transmission infrarouge.

Naturellement, dans une réalisation, si on utilise un système de détection (vision) multi spectral (dans le proche infrarouge et dans le visible), on peut également souhaiter que dans la zone de transmission infrarouge, le vitrage comportant éventuellement ledit élément antireflet (revêtement antireflet ou surface texturée) présente une transmission totale d'au moins d'au moins 90%, 91%, ou même 92% à une autre longueur d'onde de travail dans le visible notamment entre 400nm et 700nm notamment mesurée à la normale.

Pour quantifier la transmission du verre dans le domaine du visible, on définit souvent un facteur de transmission lumineuse, appelée transmission lumineuse, souvent abrégée « $T_L$ », calculé entre 380 et 780 nm et ramené à une épaisseur de verre de 3,2 mm ou 4 mm, selon la norme ISO 9050 :2003, en prenant donc en considération l'illuminant D65 tel que défini par la norme ISO/CIE 10526 et l'observateur de référence colorimétrique C.I.E. 1931 tel que défini par la norme ISO/CIE 10527.

Naturellement la transmission lumineuse $T_L$ du vitrage (zone centrale du pare-brise) est de préférence d'au moins 70% ou 75%, 80% ou 85%, 88%.

De préférence, l'élément antireflet comporte, voire consiste en, un revêtement antireflet sur la surface intérieure ou la face F2 ou F4.

En particulier,

- le revêtement antireflet peut comprendre, voire consister en, un empilement de couches minces diélectriques (d'oxyde et/ou de nitrures de métal ou de silicium par exemple) alternant haut et bas indice de réfraction à la longueur d'onde de travail, notamment empilement obtenu par dépôt physique en phase vapeur dit PVD.
- ou le revêtement antireflet peut comprendre, voire consister en, une couche de silice poreuse, notamment une couche sol gel de silice nanoporeuse notamment avec un degré de porosité de 20% à 70% notamment de 35% à 65% et même de 40% à 50%.

Le revêtement antireflet peut aussi comporter une surcouche si elle n'altère pas les propriétés antireflet.

Le revêtement antireflet notamment de silice poreuse selon l'invention peut avoir une épaisseur avantageusement comprise entre 50 nm et 1 $\mu$m et plus préférentiellement entre 70 et 500nm.

Dans un mode de réalisation de silice poreuse, la couche poreuse peut aussi être de type sol gel telle que comme décrite dans le document WO2008/059170. La couche poreuse peut ainsi être obtenue avec des agents porogènes qui sont de préférence des billes polymériques.

La couche de silice poreuse (ou nanoporeuse) peut présenter des pores fermés d'au moins 20nm, 50nm ou 80nm éventuellement avec des pores ayant une concentration augmentant en direction de la surface libre.

On préfère que la majorité des pores fermés, voire au moins 80% d'entre eux, aient une forme donnée sensiblement identique, notamment allongée, sensiblement sphérique ou ovale.

La silice poreuse peut être dopée par exemple pour améliorer encore davantage sa tenue hydrolytique dans le cas d'applications où une bonne résistance est nécessaire (façades, extérieurs etc).

Le revêtement antireflet notamment couche de silice poreuse (sol gel) peut comporter une sous couche de protection chimique notamment d'épaisseur d'au plus 200nm par exemple, notamment une couche de silice dense, par sol gel surmonté d'une couche fonctionnelle sol gel de silice poreuse. La sous-couche peut être à base de silice ou de dérivés au moins partiellement oxydés du silicium choisi parmi le dioxyde de silicium, des oxydes de silicium sous stoechiométriques, l'oxycarbure, l'oxynitrure ou l'oxycarbonitrure de silicium.

La sous-couche s'avère utile quand la surface sous-jacente est en verre silicosodocalcique car elle joue le rôle de barrière aux alcalins.

Cette sous-couche comprend donc avantageusement Si, O, éventuellement du carbone et de l'azote. Mais elle peut comprendre aussi des matériaux minoritaires par rapport au silicium, par exemple des métaux comme Al, Zn ou Zr. La sous-couche peut être déposée par sol-gel ou par pyrolyse, notamment par pyrolyse en phase gazeuse (CVD). Cette sous-couche a de préférence une épaisseur d'au moins 5 nm, notamment une épaisseur comprise entre 10nm et 200 nm, par exemple entre 80nm et 120 nm.

On peut aussi mettre un élément antireflet (revêtement antireflet ou surface texturée) également en face F1.

La face F1 peut comporter en outre une couche fonctionnelle : hydrophobe etc.

Le vitrage peut être feuilleté.

La première feuille de verre peut présenter une teneur pondérale en oxyde de fer total d'au plus 0,05% et la deuxième feuille de verre présenter une teneur pondérale en oxyde de fer total d'au plus 0,05%.

La deuxième feuille de verre notamment à base de silice, sodocalcique, de préférence silicosodocalcique, voire aluminosilicate, ou borosilicate présente de préférence une teneur pondérale en oxyde de fer total (exprimé sous la forme $Fe_2O_3$) d'au moins 0,4% et de préférence d'au plus 1,5%.

La première feuille de verre notamment à base de silice, sodocalcique, silicosodocalcique, ou aluminosilicate, ou borosilicate, présente une teneur pondérale en oxyde de fer total (exprimé sous la forme $Fe_2O_3$) d'au plus 0,05% (500ppm), de préférence d'au plus 0,03% (300ppm) et d'au plus 0,015% (150ppm) et notamment supérieure ou égale à 0,005%. Le rédox de la première feuille de verre est de préférence supérieur ou égal à 0,15.

L'oxyde de fer, présent comme impureté dans la plupart des matières premières naturelles utilisées en verrerie (sable, feldspath, calcaire, dolomie...), absorbe à la fois dans le domaine du visible et proche ultraviolet (absorption due à l'ion ferrique $Fe^{3+}$) et surtout dans le domaine du visible et proche infrarouge (absorption due à l'ion ferreux $Fe^{2+}$) c'est pourquoi on réduit l'oxyde de fer dans la première feuille de verre.

Dans la deuxième feuille de verre, on peut donc choisir une teneur en oxyde de fer plus élevée dans le cas du trou traversant.

Dans une configuration avec le trou traversant, la pièce peut être espacée de la paroi (de la deuxième feuille de verre) d'une distance d'au moins 0,1mm ou 0,3mm et d'au plus 3mm ou 0,7mm. La surface de la pièce peut être sous affleurant à la face F4, affleurant à la face F4, suraffleurant à la face F4

On préfère que la pièce soit espacée (espace vide ou comblé) mais pas trop pour garder sa fonction de sécurité.

La pièce, notamment en verre de préférence extraclair ou polymère, peut être d'épaisseur d'au moins 0,1mm ou même d'au moins 0,3mm, et d'au plus 1,5mm ou même d'au plus 1,2mm ou 1mm ou 0,9mm ou 0,75mm (en fonction du niveau de transmission demandée et/ou du renfort de sécurité demandé).

Comme exemple de verre mince on peut citer les verres Gorilla® de la société Corning, verre aluminosilicate et éventuellemeent trempés chimiquement

La pièce peut être courbée (convexe) suivant la courbure de la première feuille de verre, notamment la pièce est courbée et est un verre trempé suivant la courbure de la première feuille de verre.

La pièce courbée, notamment convexe, (notamment en verre) peut être suivant la courbure de la première feuille de verre. Dans une réalisation, cette pièce est bombée simultanément aux première et deuxième feuilles de verre.

Des exemples de bombage (des feuilles des verre et/ou de la pièce) sont le bombage gravitaire non pressé ou pressé ou encore du bombage trempé ou semi-trempé.

Si la pièce de verre subit une opération de bombage trempe, la pièce est bombée et est verre trempé.

La pièce courbée (notamment en verre) peut être suivant la courbure de la première feuille de verre. La pièce peut être en verre trempé (mince) et même bombée.

La pièce peut être minérale. De préférence, elle comporte au moins 90% ou 95 ou 99% ou 100% en poids de matière minérale. La pièce peut être en verre notamment trempé (thermiquement) ou trempé chimiquement ou encore recuite ou même ssans traitement thermique.

Ce peut être un verre à base de silice, sodocalcique, silicosodocalcique, ou aluminosilicate, ou borosilicate, et qui présente une teneur pondérale en oxyde de fer total (exprimé sous la forme $Fe_2O_3$) d'au plus 0,05% (500ppm), de préférence d'au plus 0,03% (300ppm) et d'au plus 0,015% (150ppm) et notamment supérieure ou égale à 0,005%.

La pièce peut être en verre borosilicate K9 ou BK7 en verre de silice (fused silica en anglais) encore en verre décrit dans les demandes WO2014128016 ou WO2018015312 ou WO2018178278.

La pièce notamment courbée suivant la courbure de la première feuille de verre peut être en verre, en particulier trempé, présentant une teneur pondérale en oxyde de fer total d'au plus 0,05%, en particulier verre extraclair, notamment silicosodocalcique et notamment de composition identique (ou similaire) à la composition du verre de la première feuille de verre notamment silicosodocalcique.

La pièce peut être alternativement en BaF2, CaF2,

Au moins une fraction de l'épaisseur de la pièce dans le trou traversant et même l'épaisseur de la pièce peut être dans le trou traversant.

La surface de liaison est de préférence sous affleurante de la face F3 (notamment intercalaire de feuilletage avec trou partiel ou épaisseur réduite localement) ou affleurant de la face F3 ou suraffleurant de la face F3 (dans le trou traversant), par exemple une surépaisseur d'intercalaire via le film de liaison ici en matière de l'intercalaire ajouté avant feuilletage etc. Et/ou la surface intérieure étant sous affleurante (dans le trou traversant), affleurant ou suraffleurant de la face F4.

Dans une réalisation, le vitrage feuilleté comporte dans la zone de transmission infrarouge au plus un film polymère fonctionnel (avec ou sans revêtement notamment ledit revêtement chauffant sur une ou deux faces) distinct de l'intercalaire de l'intercalaire de feuilletage, sous la face F3 (avec ou sans trou traversant).

L'intercalaire de feuilletage peut comporter un PVB, éventuellement comportant PVB/film fonctionnel tel que film polymère avec revêtement athermique /PVB, PVB éventuellement acoustique, PVB éventuellement ayant un trou traversant ou de préférence partiel d'intercalaire au droit du trou traversant.

Le trou traversant ou partiel d'intercalaire éventuel peut être plus large que le trou traversant (au moins avant feuilletage) en particulier d'au plus 5mm ou 10mm.

De préférence, la surface de liaison nu ou revêtue est en contact adhésif avec la face Fb (sans colle, sans film polymère collé).

Sans sortir du cadre de l'invention, l'intercalaire de feuilletage peut bien entendu comprendre plusieurs feuillets en matière thermoplastique de natures différentes, par exemple de duretés différentes pour assurer une fonction acoustique, comme par exemple décrit dans la publication US 6132882, notamment une ensemble de feuillets de PVB de duretés différentes. De même l'une des feuilles de verres peut être amincie par rapport aux épaisseurs classiquement utilisées.

L'intercalaire peut selon l'invention présenter une forme en coin, notamment en vue d'une application HUD (Head Up Display pour visualisation tête haute).

Comme intercalaire de feuilletage usuel, outre le PVB, on peut citer le polyuréthane PU utilisé souple, un thermoplastique sans plastifiant tel que le copolymère éthylène/acétate de vinyle (EVA), une résine ionomère. Ces plastiques ont par exemple une épaisseur entre 0,2 mm et 1,1mm, notamment 0,3 et 0,7mm.

Comme déjà évoqué, le vitrage peut comporter entre la face F2 et Fa, une couche de masquage opaque notamment un émail (noir etc) sur la face F2 et/ou sur la face Fa (en particulier sur Fa une encre notamment noire etc), en bordure de la zone de transmission infrarouge (dudit trou traversant éventuel) entre la face F2 et Fa, en particulier en zone périphérique et même centrale et de préférence le long du bord longitudinal du vitrage. La couche de masquage est par exemple en face F2 et le revêtement de camouflage est sur la couche de masquage ou sous la couche de masquage et/ou la couche de masquage est sur la face Fa et le revêtement de camouflage sur la face F2 est en contact avec la couche de masquage.

La couche de masquage peut alors présenter une épargne au droit de la zone de transmission infrarouge (dudit trou traversant éventuel) au moins dans la zone centrale et de préférence dépasse d'au plus 50mm, 30mm ou 20mm ou 10mm, 7mm ou 5mm dans la zone de transmission infrarouge (dudit trou traversant éventuel).

La couche de masquage peut être à 2mm ou 3mm (moins de 5 mm) de la tranche du vitrage (la plus proche).

La couche de masquage peut être un bandeau encadrant le vitrage (pare-brise etc) notamment en émail noir. On crée donc une épargne dans cette couche de masquage. Une autre couche de masquage (émail notamment noir etc) peut être en face F3 ou F4 notamment faisant face à la couche de masquage (et même de nature identique par exemple un émail notamment noir).

Naturellement l'application la plus recherchée est que le vitrage soit un pare-brise d'un véhicule routier (automobile) ou même ferroviaire (à vitesse modérée).

La deuxième feuille de verre est notamment verte, bleue, grise. La deuxième feuille de verre peut être verte par le $Fe_2O_3$ ou encore bleue avec CoO et Se ou grise avec Se et CoO.

On peut citer notamment les verres de la Demanderesse dénommés TSAnx (0,5 à 0,6% de fer) TSA2+, TSA3+(0,8 à 0,9% de fer),TSA4+(1% de fer),TSA5+, par exemple verts.

Le TSA3+ (2.1mm) a par exemple une transmission totale à 905mm d'environ 40% et à 1550mm d'environ 50%.

La deuxième feuille de verre peut présenter un rédox étant défini comme étant le rapport entre la teneur pondérale en FeO (fer ferreux) et la teneur pondérale en oxyde de fer total (exprimé sous la forme $Fe_2O_3$) entre 0,22 et 0,35 ou 0,30.

Ladite deuxième feuille de verre peut avoir une composition chimique qui comprend les constituants suivants en une teneur variant dans les limites pondérales ci-après définies :

| | |
|---|---|
| $SiO_2$ | 64 - 75 % |
| $Al_2O_3$ | 0 - 5 % |
| $B_2O_3$ | 0 - 5%, |
| CaO | 2 - 15 % |
| MgO | 0 - 5 % |
| $Na_2O$ | 9 - 18 % |
| $K_2O$ | 0 - 5 % |
| $SO_3$ | 0,1 - 0,35% |
| $Fe_2O_3$ (fer total) | au moins 0,4% et même 0,4 à 1,5%, |

(suite)

| | |
|---|---|
| Eventuellement Rédox | 0,22 - 0,3 |

Et notamment moins de 0,1% d'impuretés.

La première feuille de verre peut être par exemple un verre silico-sodo-calcique comme le verre Diamant® de Saint-Gobain Glass, ou Optiwhite® de Pilkington, ou B270® de Schott, ou Sunmax® d'AGC ou d'autre composition décrite dans le document WO04/025334. On peut aussi choisir le verre Planiclear® de la société Saint-Gobain Glass.

Le vitrage feuilleté selon l'invention, en particulier pour voiture individuelle (parebrise etc) ou camion, peut être courbé (bombé) suivant one ou plus directions notamment avec pour la première feuille, la deuxième et éventuellement la pièce un rayon de courbure de 10cm à 40cm. Il peut être plan pour les bus, trains, tracteurs.

Avec les matières premières naturelles ordinaires, la teneur pondérale totale en oxyde de fer est de l'ordre de 0,1% (1000 ppm). Pour abaisser la teneur en oxyde de fer, on peut choisir des matières premières particulièrement pures.

Dans la présente invention, la teneur en $Fe_2O_3$ (fer total) de la première feuille de verre est de préférence inférieure à 0,015%, voire inférieure ou égale à 0,012%, notamment 0,010%, afin d'augmenter la transmission proche infrarouge du verre. La teneur en $Fe_2O_3$ est de préférence supérieure ou égale à 0,005%, notamment 0,008% pour ne pas trop pénaliser le coût du verre.

Pour augmenter plus encore la transmission de la première feuille de verre dans l'infrarouge, on peut diminuer la teneur en ferferreux au profit de la teneur en fer ferrique, donc d'oxyder le fer présent dans le verre. On vise ainsi des verres ayant un « rédox » le plus faible possible, idéalement nul ou quasi nul. Ce nombre peut varier entre 0 et 0,9, des rédox nuls correspondant à un verre totalement oxydé.

Les verres comprenant de faibles quantités d'oxyde de fer, notamment moins de 200 ppm, voire moins de 150 ppm, ont une tendance naturelle à présenter des rédox élevés, supérieurs à 0,4, voire même à 0,5. Cette tendance est probablement due à un déplacement de l'équilibre d'oxydoréduction du fer en fonction de la teneur en oxyde de fer. Le rédox de la première feuille de verre est de préférence supérieur ou égal à 0,15, et notamment compris entre 0,2 et 0,30, notamment entre 0,25 et 0,30. De trop faibles rédox contribuent en effet à la réduction de la durée de vie des fours.

Ladite première feuille de verre peut avoir une composition chimique qui comprend les constituants suivants en une teneur variant dans les limites pondérales ci-après définies :

| | |
|---|---|
| $SiO_2$ | 60 - 75 % |
| $Al_2O_3$ | 0 - 10 % |
| $B_2O_3$ | 0 - 5 %, de préférence 0 |
| CaO | 5 - 15 % |
| MgO | 0 - 10 % |
| $Na_2O$ | 5 - 20 % |
| $K_2O$ | 0 - 10 % |
| BaO | 0 - 5 %, de préférence 0, |
| $SO_3$ | 0,1 - 0,4% |
| $Fe_2O_3$ (fer total) | 0 à 0,015%, |
| et Rédox | 0,1 - 0,3. |

Dans l'ensemble du texte, les pourcentages sont des pourcentages pondéraux.

Et la pièce peut avoir une composition chimique qui comprend les constituants suivants en une teneur variant dans les limites pondérales ci-après définies :

| | |
|---|---|
| $SiO_2$ | 60 - 75 % |
| $Al_2O_3$ | 0 - 10% |
| $B_2O_3$ | 0 - 5 %, de préférence 0 |
| CaO | 5 - 15 % |
| MgO | 0 - 10 % |
| $Na_2O$ | 5 - 20 % |
| $K_2O$ | 0 - 10 % |
| BaO | 0 - 5 %, de préférence 0, |
| $SO_3$ | 0,1 - 0,4% |
| $Fe_2O_3$ (fer total) | 0 à 0,015%, |

| | |
|---|---|
| (suite) | |
| et Rédox | 0,1 - 0,3. |

Les feuilles de verre (et même de la pièce) sont de préférence formées par flottage sur un bain d'étain. D'autres types de procédé de formage peuvent être employés, tels que les procédés d'étirage, procédé « down-draw » (procédé d'étirage par le bas), procédé de laminage, procédé Fourcault...

La composition de verre de la première feuille de verre (et même de la pièce) peut comprendre, outre les impuretés inévitables contenues notamment dans les matières premières, une faible proportion (jusqu'à 1 %) d'autres constituants, par exemple des agents aidant à la fusion ou l'affinage du verre (Cl...), ou encore des éléments provenant de la dissolution des réfractaires servant à la construction des fours (par exemple $ZrO_2$). Pour les raisons déjà évoquées, la composition selon l'invention ne comprend de préférence pas d'oxydes tels que $Sb_2O_3$, $As_2O_3$ ou $CeO_2$.

La composition de la première feuille de verre (et même de la pièce) ne comprend de préférence aucun agent absorbant les infrarouges (notamment pour une longueur d'ondes comprise entre 800 et 1800nm). En particulier, la composition selon l'invention ne contient de préférence aucun des agents suivants : les oxydes d'éléments de transition tels que CoO, CuO, $Cr_2O_3$, NiO, $MnO_2$, $V_2O_5$, les oxydes de terres rares tels que $CeO_2$, $La_2O_3$, $Nd_2O_3$, $Er_2O_3$, ou encore les agents colorants à l'état élémentaire tels que Se, Ag, Cu. Parmi les autres agents de préférence exclus figurent également les oxydes des éléments suivants : Sc, Y, Pr, Sm, Eu, Gd, Tb, Dy, Ho, Tm, Yb, Lu. Ces agents ont bien souvent un effet colorant indésirable très puissant, se manifestant à de très faibles teneurs, parfois de l'ordre de quelques ppm ou moins (1 ppm = 0,0001%). Leur présence diminue ainsi très fortement la transmission du verre.

De préférence, la première feuille de verre (et même la pièce) présente une composition chimique qui comprend les constituants suivants en une teneur variant dans les limites pondérales ci-après définies :

| | |
|---|---|
| $SiO_2$ | 60 - 75 % |
| $Al_2O_3$ | 0 - 10% |
| $B_2O_3$ | 0 - 5 %, de préférence 0 |
| CaO | 5 - 15 % |
| MgO | 0 - 10 % |
| $Na_2O$ | 5 - 20 % |
| $K_2O$ | 0 - 10 % |
| BaO | 0 - 5 %, de préférence 0, |
| $SO_3$ | > 0,2 - 0,4% |
| $Fe_2O_3$ (fer total) | 0 à 0,015%, |
| Et Rédox | 0,2 - 0,30. |

La première feuille de verre (et même la pièce) peut présenter une composition chimique qui comprend les constituants suivants en une teneur variant dans les limites pondérales ci-après définies :

| | |
|---|---|
| $SiO_2$ | 60 - 75 % |
| $Al_2O_3$ | 0 - 10 % |
| $B_2O_3$ | 0 - 5 %, de préférence 0 |
| CaO | 5 - 15 % |
| MgO | 0 - 10 % |
| $Na_2O$ | 5 - 20 % |
| $K_2O$ | 0 - 10 % |
| BaO | 0 - 5 %, de préférence 0, |
| $SO_3$ | 0,1 - 0,4% |
| $Fe_2O_3$ (fer total) | 0 à 0,02%, |
| Et Rédox | 0,15 - 0,3. |

Dans la présente invention, la teneur en $Fe_2O_3$ (fer total) est de préférence inférieure à 0,015%, voire inférieure ou égale à 0,012%, notamment 0,010%, ce afin d'augmenter la transmission proche infrarouge du verre. La teneur en $Fe_2O_3$ est de préférence supérieure ou égale à 0,005%, notamment 0,008% pour ne pas trop pénaliser le coût du verre (de la deuxième feuille de verre et la pièce).

Le rédox est de préférence supérieur ou égal à 0,15, et notamment compris entre 0,2 et 0,30, notamment entre 0,25 et 0,30. De trop faibles rédox contribuent en effet à la réduction de la durée de vie des fours.

Dans les verres selon l'invention (première feuille, deuxième feuille et même la pièce), la silice $SiO_2$ est généralement maintenue dans des limites étroites pour les raisons suivantes. Au-dessus de 75 %, la viscosité du verre et son aptitude à la dévitrification augmentent fortement ce qui rend plus difficile sa fusion et sa coulée sur le bain d'étain fondu. Au-dessous de 60 %, notamment 64%, la résistance hydrolytique du verre décroît rapidement. La teneur préférée est comprise entre 65 et 75%, notamment entre 71 et 73%.

D'autres compositions préférées selon l'invention pour la première feuille de verre voire même la pièce sont reproduites ci-après :

| | |
|---|---|
| $SiO_2$ | 65 - 75 % |
| $Al_2O_3$ | 0 - 3 % |
| CaO | 7 - 12 % |
| MgO | 2 - 5 % |
| $Na_2O$ | 10 - 15 % |
| $K_2O$ | 0 - 5 % |
| $SO_3$ | 0,1 - 0,3% |
| $Fe_2O_3$ (fer total) | 0 à moins de 0,015%, |
| Et Rédox | 0,1 - 0,3. |

D'autres compositions préférées selon l'invention pour la première feuille de verre voire même la pièce sont reproduites ci-après :

| | |
|---|---|
| $SiO_2$ | 65 - 75 % |
| $Al_2O_3$ | 0 - 5 % |
| CaO | 7 - 12% |
| MgO | 1 - 5 % |
| $Na_2O$ | 10 - 15 % |
| $K_2O$ | 0 - 5% |
| $SO_3$ | 0,2 - 0,4% |
| $Fe_2O_3$ (fer total) | 0 à moins de 0,015%, |
| Et Rédox | 0,1 - 0,3. |

L'invention se rapporte également à un dispositif qui comprend :

- le vitrage tel que décrit précédemment
- un système de détection (vision) infrarouge à la longueur d'onde de travail dans l'infrarouge (voire multi spectral, également dans le visible, notamment entre 500 et 600nm), disposé dans l'habitacle derrière ledit vitrage et comportant un émetteur et/ou récepteur, de façon à envoyer et/ou recevoir un rayonnement traversant la première feuille de verre au niveau de la zone de transmission infrarouge.

Le système de détection infrarouge est de préférence un LIDAR ou une caméra proche infrarouge.

Le système de vision infrarouge (LIDAR) peut être de différentes technologies. Il permet de mesurer l'environnement du véhicule en déterminant la distance de l'objet le plus proche au véhicule dans une large gamme de directions angulaires. Ainsi l'environnement du véhicule peut être reconstitué en 3D. La technologie employée repose sur l'envoi d'un faisceau lumineux, et sa réception après avoir été réfléchi de manière diffuse sur un obstacle. Cela peut être fait par une source rotative, scannée par des microsystèmes électromécaniques (MEMS), ou par un système tout solide. Un seul flash de lumière peut aussi illuminer globalement l'environnement.

Pour toutes ces technologies, la lumière doit traverser deux fois le vitrage, à l'aller et au retour, ce qui explique la nécessité de disposer d'un vitrage d'une excellente transparence à la longueur du travail du LIDAR.

Avec une technologie DOPPLER on peut mesurer la vitesse en outre.

Le système de vision infrarouge (LIDAR) est de préférence espacé de l'élément antireflet.

La pièce dans le trou traversant selon l'invention est de préférence espacée du système de vision infrarouge (LIDAR) et/ou ne sert pas à sa fixation. Le système de vision infrarouge (LIDAR) peut être en face ou déporté dudit trou traversant (et de la pièce) par exemple un système optique est entre la pièce et le du système de vision infrarouge (LIDAR).

Le système de vision infrarouge (LIDAR) est par exemple fixé via la face F4 et/ou la carrosserie, la garniture du toit. Le système de vision infrarouge (LIDAR) peut être déporté.

Le système de vision infrarouge (LIDAR) est par exemple intégré à une platine ou embase multifonction apte à (conçue pour) optimiser son positionnement vis-à-vis du pare-brise (et de la pièce éventuelle) en étant collé sur la face F4.

Certains modes de réalisations avantageux mais non limitatif de la présente invention sont décrits ci-après, qui peuvent bien entendu combinés entres eux le cas échéant. Les vues ne sont pas à l'échelle.

La figure 1 schématise en vue de coupe un pare-brise 100 dans un premier mode de réalisation de l'invention avec un système de détection (vision) infrarouge tel qu'un LIDAR ou une caméra proche infrarouge. La figure 2 schématise en vue de face (côté habitacle) le pare-brise 100 du premier mode de réalisation de l'invention.

La figure 3 schématise en vue de coupe un pare-brise 200 selon l'invention avec un système de vision infrarouge tel qu'un LIDAR dans un deuxième mode de réalisation de l'invention.

La figure 4 schématise en vue de coupe un pare-brise 300 selon l'invention avec un système de vision infrarouge tel qu'un LIDAR dans un troisième mode de réalisation de l'invention. La figure 5 schématise en vue de face (côté habitacle) ce pare-brise 300.

La figure 6a schématise en vue de coupe un pare-brise 400a selon l'invention avec un système de vision infrarouge tel qu'un LIDAR dans un quatrième mode de réalisation de l'invention.

La figure 6b schématise en vue de coupe un pare-brise 400b selon l'invention avec un système de vision infrarouge tel qu'un LIDAR dans une variante du quatrième mode de réalisation de l'invention.

La figure 7 schématise en vue de coupe un pare-brise 500 selon l'invention avec un système de vision infrarouge tel qu'un LIDAR dans un cinquième mode de réalisation de l'invention.

La figure 8 schématise en vue de coupe un pare-brise 600 selon l'invention, avec un système de vision infrarouge tel qu'un LIDAR dans un sixième mode de réalisation de l'invention.

La figure 9 schématise en vue de coupe un pare-brise 700 selon l'invention, avec un système de vision infrarouge tel qu'un LIDAR dans un septième mode de réalisation de l'invention.

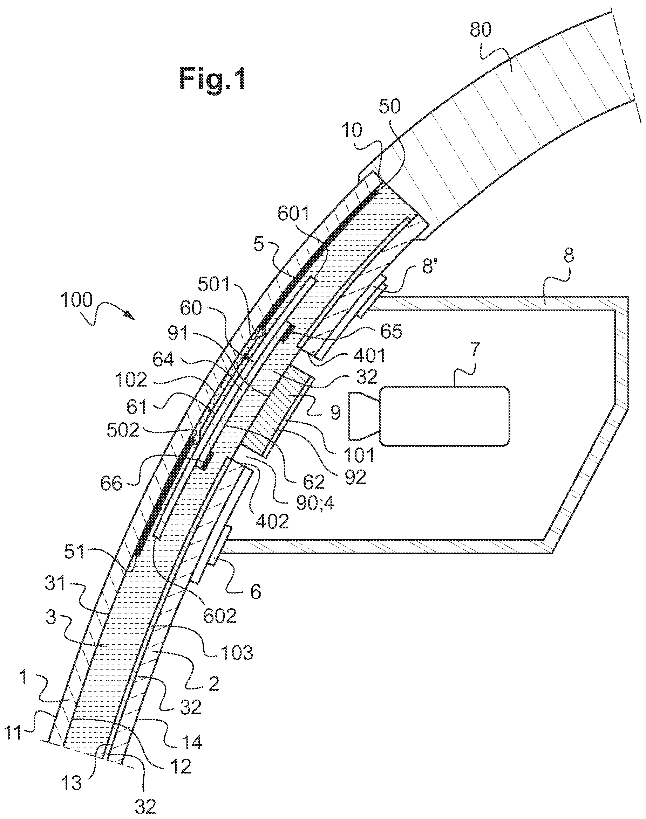

La figure 1 schématise un pare-brise de véhicule notamment automobile 100 selon l'invention, avec un système de vision infrarouge tel qu'un LIDAR à 905nm ou 1550nm comportant un émetteur/ récepteur 7.

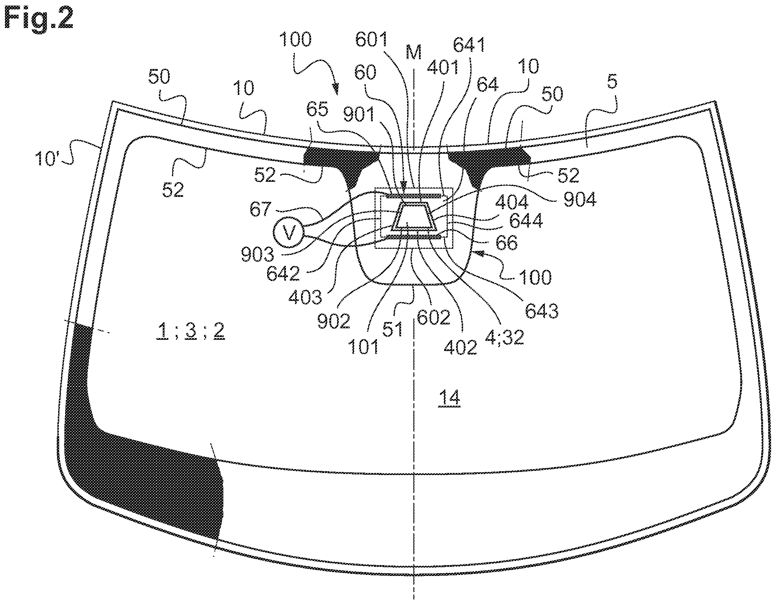

La figure 2 schématise en vue de face (côté habitacle) le pare-brise 100 du premier mode de réalisation de l'invention.

Ce système de vision 7 est placé derrière le pare-brise face à une zone qui se situe de préférence dans la partie centrale et supérieure du pare-brise. Dans cette zone, le système de vision infrarouge est orienté avec un certain angle vis-à-vis de la surface du pare-brise (face F4 14). En particulier, l'émetteur/récepteur 7 peut être orienté directement vers la zone de saisie d'images, selon une direction proche de la parallèle au sol, c'est-à-dire légèrement inclinée vers la route. Autrement dit, l'émetteur/récepteur 7 du LIDAR pet être orienté vers la route selon un angle faible avec un champ de vision adapté pour remplir leurs fonctions.

En variante le récepteur 7 est dissocié de l'émetteur, notamment adjacent.

Le pare-brise 100 est un vitrage feuilleté bombé comprenant :

- une feuille de verre externe 1, avec face extérieure F1 et face intérieure F2
- et une feuille de verre interne 2, par exemple d'épaisseur ou même de 1,6mm ou même moins, avec face extérieure F3 et face intérieure F4 côté habitacle
- les deux feuilles de verre étant liées l'une à l'autre par un intercalaire en matière thermoplastique 3 (mono ou multifeuillet), le plus souvent en polyvinylbutyral (PVB) de préférence clair, d'épaisseur submillimétrique éventuellement présentant une section transversale diminuant en forme en coin du haut vers le bas du vitrage feuilleté, par exemple un PVB (RC41 de Solutia ou d'Eastman) d'épaisseur 0,76mm environ ou en variante si nécessaire un PVB acoustique (tricouche ou quadricouche) par exemple d'épaisseur 0,81mm environ, par exemple intercalaire en trois feuillets PVB, PVB avec une face principale interne 31 et une face principale 32.

Le pare-brise de véhicule routier en particulier est bombé.

De façon classique et bien connue, le pare-brise est obtenu par feuilletage à chaud des première, deuxième feuilles de verre bombés 1, 2 et de l'intercalaire 3. On choisit par exemple un PVB clair de 0,76mm.

La première feuille de verre 1 notamment à base de silice, sodocalcique, silicosodo calcique (de préférence), aluminosilicate, ou borosilicate, présente une teneur pondérale en oxyde de fer total (exprimé sous la forme $Fe_2O_3$) d'au plus 0,05% (500ppm), de préférence d'au plus 0,03% (300ppm) et d'au plus 0,015% (150ppm) et notamment supérieure ou égale à 0,005%. La première feuille de verre peut présenter un rédox supérieur ou égal à 0,15, et notamment compris entre 0,2 et 0,30, notamment entre 0,25 et 0,30. On choisit notamment un verre OPTWHITE de 1,95mm.

La deuxième feuille de verre 2 notamment à base de silice, sodocalcique, de préférence silicosodo calcique (comme la première feuille de verre), voire aluminosilicate, ou borosilicate présente une teneur pondérale en oxyde de fer total d'au moins 0,4% et de préférence d'au plus 1,5%.

On peut citer notamment les verres de la Demanderesse dénommés TSAnx (0,5 à 0,6% de fer) TSA2+, TSA3+(0,8 à 0,9% de fer), TSA4+(1% de fer), TSA5+, par exemple verts. On choisit par exemple un verre TSA3+ de 1,6mm.

Selon l'invention, dans une région centrale périphérique le long du bord longitudinal supérieur 10, le pare-brise 100a comporte afin de former une zone de transmission infrarouge :

- un trou traversant 4, ici fermé, de la deuxième feuille de verre 2, trou 4 donc délimité par une paroi du verre 401 à 404
- éventuellement dans une variante avec émetteur et récepteur dissocié, à proximité du trou traversant (qui est pour le récepteur) un autre trou traversant fermé de la deuxième feuille de verre 2 (qui est pour l'émetteur).

On définit une ligne centrale M passant par le milieu du bord supérieur qui peut être un axe de symétrie du vitrage.

Le trou traversant 4 peut être central ainsi la ligne M passe le divise en deux parties identiques.

Dans ladite zone de transmission infrarouge, le vitrage comporte, au sein de l'intercalaire de feuilletage (par exemple entre deux feuillets de PVB) un élément fonctionnel chauffant 60. Il présente un bord supérieur 601 sous la zone émail 5 et un bord inférieur 602 vers le centre du pare-brise.

L'élément fonctionnel chauffant 60 comporte une feuille ou support polymère par exemple PET de 100$\mu$m ou encore verrier extraclair (un UTG de 200 ou 100$\mu$m), transparente à la longueur d'onde de travail du LIDAR avec une première face principale côté face F2 61 et avec une deuxième face principale côté face F3 62. Le support est de forme rectangulaire avec bords longitudinaux horizontaux 601 et 602.

La deuxième face 62 (alternativement la première face principale 61) est porteuse d'un revêtement chauffant 64 par exemple de forme rectangulaire (même forme que le film 60) en regard du trou traversant 4 formant zone de chauffage locale. Le revêtement chauffant est en matériau transparent à au moins la longueur d'onde dite de travail dans l'infrarouge comme détaillé ultérieurement.

Les bords longitudinaux horizontaux ou grands côtés 641, 643 de la couche 64 peuvent être parallèles aux grands côtés du trou traversant 4. Les petits côtés 642, 644 de la couche 64 peuvent être parallèles aux petits côtés du trou traversant 4.

La zone de chauffage rectangulaire 64 est pourvue de deux amenées de courant ou premier et deuxièmes bus bars locaux (dédiés) horizontaux 65,66 décalés du trou traversant de part et d'autre des grands côtés du trou traversant 4 alimentés en tension 67 par exemple par 15V ou 48V ou même 12V ou 24V ou même à plus grande tension (pour un véhicule électrique notamment).

On adapte à façon la longueur des bus bar de préférence égaux ou plus longs ou que les grands côtés du trou traversant.

Dans le cas de trou traversant rond ou ovale les bus bars sensiblement horizontaux peuvent être courbes pour suivre la forme du trou traversant.

On peut souhaiter rapprocher les bus bars le plus possible pour augmenter la densité de puissance.

L'élément fonctionnel chauffant 60 s'étend au-delà de la région du trou traversant 4. Par exemple le revêtement chauffant peut couvrir l'autre trou traversant éventuel, une autre zone de transmission notamment infrarouge (pour un autre détecteur etc).

L'élément fonctionnel chauffant 60 peut être porteur d'éléments comme capteur(s) (antenne etc) d'écran électroluminescent, notamment sur la face 62 côté F3, éléments décalé de la zone de transmission infrarouge (sous la face F3).

Le revêtement chauffant 64 comportant une couche chauffante en matériau électroconducteur transparent à ladite longueur d'onde dite de travail qui est un oxyde transparent conducteur comportant un oxyde d'indium et d'un autre métal choisi parmi le molybdène et le titane, autre métal éventuellement à l'état oxydé.

Par exemple, le pourcentage en poids d'oxyde d'indium est de 98%, le pourcentage en poids du molybdène (éventuellement oxydé) ou de titane (éventuellement oxydé) est de 2%, la somme en poids d'indium et de titane (éventuellement oxydé) ou du molybdène (éventuellement oxydé) est d'au moins 99% ou 100%.

Le revêtement chauffant comporte en outre au moins une éventuelle sous couche d'oxy et/ou nitrure de métal ou de silicium et/ou au moins une éventuelle sur couche d'oxy et/ou nitrure de métal ou de silicium.

Dans la zone de transmission infrarouge avec la couche chauffante, le vitrage présente une transmission infrarouge d'au moins 70% à la longueur d'onde de travail.

La table 1 présente à titre d'exemple des données de chauffage (tension, puissance) et la taille de la couche chauffante (imposée par la fenêtre de transmission), la résistance par carré, la résistivité électrique et l'épaisseur de la couche chauffante.

[Table 1]

| Exemple | Tension (V) | Puissance (W/m$^2$) | Taille (cm$^2$) | Rsq (Ohm) | Résistivité (μΩ.cm) | Epaisseur (nm) |
|---|---|---|---|---|---|---|
| 1 | 14 | 280 | 100 | 70 | 200 | 30 |
| 2 | 14 | 280 | 400 | 17,5 | 200 | 110 |
| 3 | 48 | 280 | 400 | 205 | 200 | 10 |
| 4 | 14 | 280 | 100 | 70 | 400 | 60 |
| 5 | 14 | 280 | 400 | 17,5 | 400 | 220 |
| 6 | 48 | 280 | 400 | 205 | 400 | 20 |
| 7 | 48 | 600 | 400 | 96 | 200 | 20 |
| 8 | 48 | 600 | 400 | 96 | 400 | 40 |

Comme montré en figure 2 (vue de coupe suivant M), le trou traversant est ici trou fermé (entouré par la paroi de la feuille de verre), donc au sein du vitrage notamment -de section trapézoïdale - comportant :

- un premier grand côté 401 ou bord longitudinal dit supérieur le plus proche de la tranche du bord longitudinal supérieur du vitrage 10-parallèle à cette tranche- de longueur d'au plus 20cm par exemple 8cm et espacé d'au moins 3cm ou 5cm de la tranche 10
- un deuxième grand côté 402 ou bord longitudinal dit inférieur (le plus éloigné de la tranche du bord longitudinal supérieur 10, proche de la zone centrale) parallèle au premier grand côté de longueur d'au plus 70cm ou 50cm ou 20cm et de préférence plus grande que celle du premier grand côté par exemple 14cm,
- des premiers et deuxième petits côtés 403, 404, ou bords latéraux obliques.

La hauteur (entre les grands côtés 401 402) est d'au moins 3cm ici de 6cm.

L'autre trou peut être de même taille et de même forme. Par exemple ce sont deux trous horizontaux.

Le trou traversant peut avoir des coins arrondis.

Le trou traversant 4 peut être alternativement une encoche par exemple de forme trapézoïdale ou rectangulaire donc un trou traversant débouchant de préférence côté toit (sur le bord longitudinal supérieur 10).

Le trou traversant 4 fermé ou débouchant peut être dans une autre région du pare-brise 100a ou même dans un autre vitrage du véhicule en particulier la lunette arrière.

Dans le trou traversant et éventuellement sous le trou traversant (sous la face F3) et/ou surafleurant à la face F4, est présente une pièce 9 en matière transparente (notamment verre) au moins à la longueur d'onde dite de travail dans l'infrarouge du LIDAR dans une gamme allant de 800nm à 1800nm, en particulier de 850nm à 1600nm, notamment 905 ±30nm et/ou 1550±30nm.

La pièce 9 a une surface principale dite de liaison 91, ici (et de préférence) liée avec la face principale Fb ici en contact adhésif et une surface principale 92 dite surface intérieure à l'opposé de la surface de liaison.

La pièce a la même forme que le trou traversant (deux bords longitudinaux 901 et 902 et deux bords latéraux 903,904. La pièce 9 a une tranche en contact ou espacée de la paroi 401, 402 délimitant le trou traversant d'au plus 5mm, de préférence espacée et d'une distance d'au plus 2mm et même allant de 0,3 à 2mm.

La surface intérieure comportant un élément antireflet 101 à ladite longueur d'onde de travail par exemple un revêtement antireflet de silice poreuse.

La pièce est par exemple un verre extraclair, silicosodocalcique, bombé et trempé thermiquement.

La première feuille de verre 1 et la pièce 9 peuvent être un OPTIWHITE® de 1,95mm. La pièce est alternativement un verre flexible courbé de 0,1 ou 0,3mm ou 0,5mm ou 0,7mm, extraclair et éventuellement trempé chimiquement. Par exemple il s'agit du verre Gorilla®, aluminosilicate.

Le pare-brise 100a comporte sur la face F2 12 une couche de masquage opaque par exemple noire 5, tel qu'une couche d'émail ou une laque, formant un cadre périphérique du parebrise (ou de la lunette) notamment le long du bord longitudinal supérieur 10 du vitrage et notamment le long du bord latéral gauche 10' du vitrage.

Le bord externe 50 de la couche de masquage 5 le plus proche de la tranche 10 du vitrage peut être espacé de 1 ou 2mm à quelques cm de la tranche 10 (bord longitudinal). La couche de masquage opaque 5 a ici une largeur supérieure dans la zone centrale que dans les autres zones périphériques, de part et d'autre de la zone centrale. La couche de masquage 5 présente un bord (longitudinal) interne 51 dans la zone centrale du parebrise et un bord (longitudinal) interne 52 de part et d'autre de la zone centrale.

Cette zone centrale étant dotée du trou fermé 4 (figure 2) cette couche de masquage 5 comporte :

- au droit du trou 4, une première épargne suffisamment grande pour ne pas gêner les performances de l'émetteur récepteur (ou du récepteur dissocié) 7, notamment légèrement inférieure au trou traversant 4
- le cas échéant, dans la variante, au droit de l'autre trou, une deuxième épargne suffisamment grande pour ne pas gêner les performances 7 de l'émetteur dissocié, notamment légèrement inférieure à l'autre trou traversant.

La première épargne est ici de même forme trapézoïdale que le trou 4 avec deux grands côtés 501, 502 et deux petits côtés 503, 504. La première épargne peut être de préférence de taille identique ou inférieure au trou 4 par exemple les parois 501 à 504 délimitant la première épargne dépassant d'au plus 50mm ou 10mm ou même 5mm des parois du verre 401 à 404. En variante, c'est un rectangle ou toute autre forme notamment inscrite dans la surface du trou traversant (trapézoïdale ou autre).

La couche de masquage 5 est apte à masquer le boîtier 8 (plastique, métal etc) du LIDAR 7. Le boitier 8 peut être collé à la face F4 14 par une colle 6 et au toit 80. Le boitier peut être fixée à une platine 8' montée en face F4 trouée pour laisser passer lesdits rayons IR.

Dans la zone de transmission infrarouge, la première feuille de verre 1 comporte, sur la face F2, un revêtement de camouflage 102, transparent à la longueur d'onde de travail dans l'infrarouge et absorbant dans le visible.

Le revêtement de camouflage 102 est ici de forme rectangulaire dans cette région périphérique.

Les bords du revêtement de camouflage dépassent éventuellement entre la face F2 12 et la face Fa 31 par exemple au maximum de 10mm ou 5mm des parois 401 à 404 délimitant le trou traversant 4. Ici, le revêtement de camouflage 102 recouvre un peu la couche de masquage 5 éventuelle sur la face F2.

Le revêtement de camouflage 102 présente alternativement une autre forme par exemple forme homothétique à celle de la section du trou traversant donc par exemple forme trapézoïdale.

La face F3 13 comporte une couche conductrice 103 de contrôle solaire ou basse émissivité, éventuellement chauffante, notamment en particulier un empilement à l'argent.

Des variantes possibles sont les suivantes (sans être exhaustives) éventuellement cumulables :

- le revêtement de camouflage 102 ne dépasse pas du trou traversant et même est espacé du bord du trou traversant de préférence d'au plus 1cm ou 5mm
- le revêtement de camouflage 102 est espacé de la couche de masquage (par exemple qui est en face F2 notamment de l'émail) ou au moins ne la recouvre pas. Alternativement, le revêtement chauffant est :
- sur la face F2 12
- sur la deuxième feuille de verre 2, de préférence sur face principale F3 13 en vis-à-vis de la face F2 12
- sur la pièce 9 notamment face orientée vers la face F2.

L'élément fonctionnel chauffant 60 peut servir aussi de camouflage en rajoutant un revêtement de camouflage (surtout si la pièce 9 est transparente). On adapte son étendue, le revêtement de camouflage peut être de préférence sur la face 61 ici à l'opposé de la couche chauffante ou en alternative même sur toute ou partie de la couche chauffante et des bus bars.

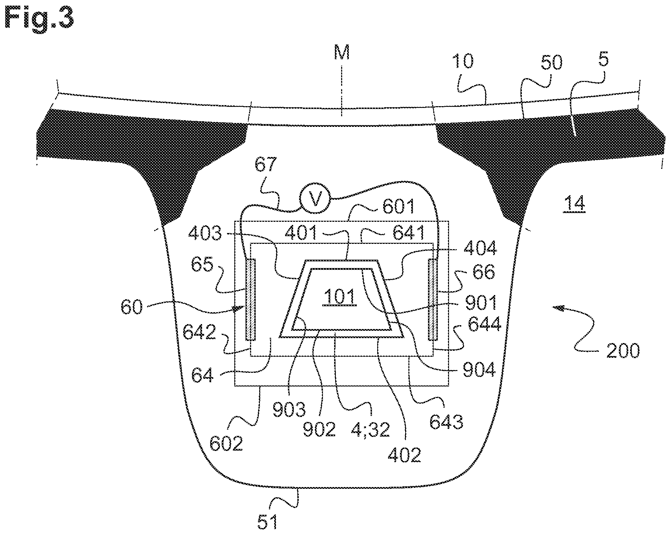

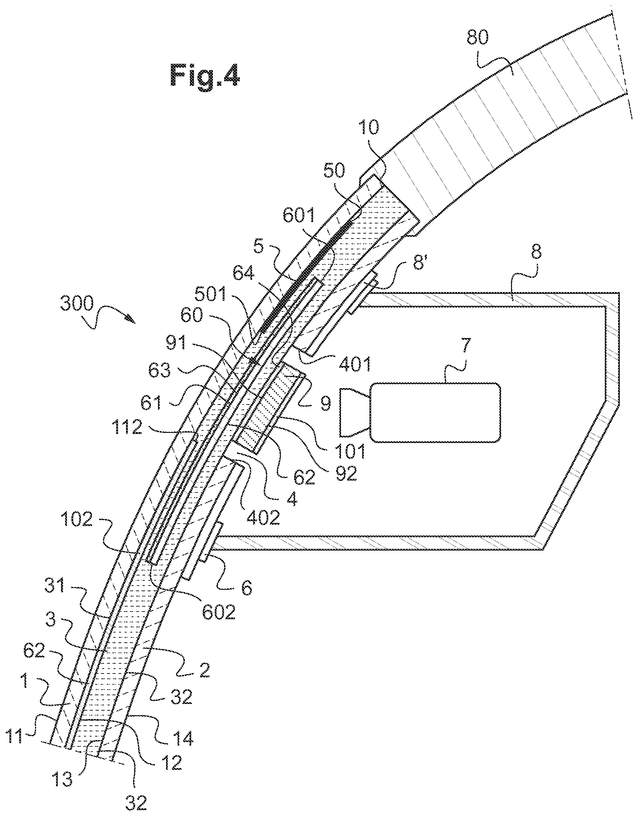

La figure 3 schématise en vue de coupe un pare-brise 200 selon l'invention avec un système de vision infrarouge tel qu'un LIDAR dans un deuxième mode de réalisation de l'invention. La figure 4 schématise en vue de face (côté habitacle) ce pare-brise 200. Seules les différences avec le premier mode sont explicitées ci-après.

Les bus bars 65 ,66 sont verticaux (ou obliques, parallèles aux bords 901, 903 de la pièce) plutôt qu'horizontaux.

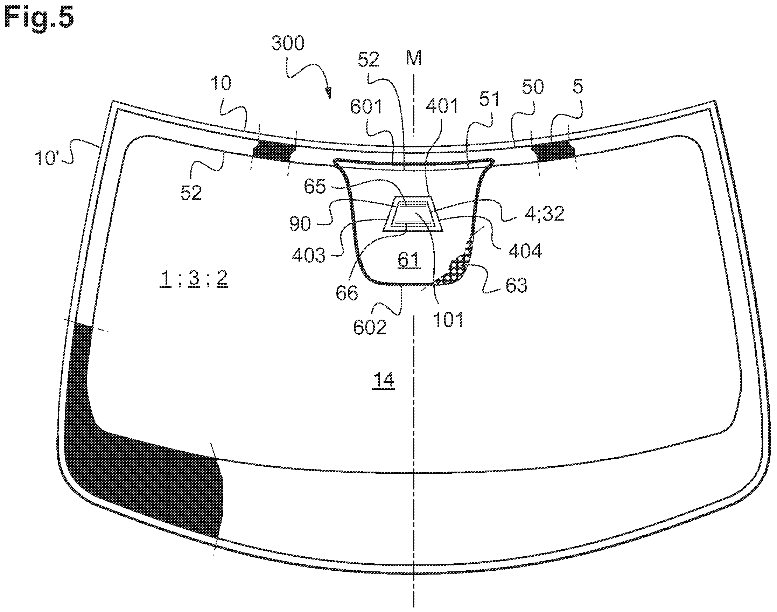

La figure 4 schématise en vue de coupe un pare-brise 300 selon l'invention avec un système de vision infrarouge tel qu'un LIDAR dans un troisième mode de réalisation de l'invention. La figure 5 schématise en vue de face (côté habitacle) ce pare-brise 300. Seules les différences avec le premier mode sont explicitées ci-après.

La couche chauffante 64 avec les bus bar horizontaux 65, 66 est placée sur la surface de liaison 92 de la pièce 9. La couche chauffante est par exemple de même forme que la pièce ici trapézoïdale. Les bords longitudinaux horizontaux ou grands côtés de la couche 64 sont parallèles aux grands côtés de la pièce 9. Les petits côtés sont parallèles aux petits côtés de la pièce 9.Ici les bus bars sont le plus en périphérie possible pour les déporter de la zone centrale de transmission infrarouge.

Par ailleurs éventuellement la couche de masquage opaque 5 n'est pas élargie dans la zone centrale (passant par M). Par exemple il existe une couche athermique 62 sur la face F2 12 couvrant sensiblement la face F2 (hors zone de transmission infrarouge et couche de masquage opaque). La couche électroconductrice athermique 62 (contrôle solaire, chauffante etc) est absente ou pourvu d'une première épargne trapézoïdale (en variante rectangulaire ou toute autre forme) au droit du trou traversant 4 (zone de transmission infrarouge). Il n'y a plus de revêtement de camouflage sur la face F2 dans la zone de transmission infrarouge.

Un élément fonctionnel 60 vient compléter le masquage (pour l'extérieur) et former une zone centrale élargie de masquage (zone d'emplacement des capteurs etc) et est disposé au sein de l'intercalaire de feuilletage par exemple en deux feuillets de PVB. Il présente un bord supérieur 601 sous la zone émail 5 et un bord inférieur 602 vers le centre du pare-brise par exemple faisait face à la couche athermique 62.

L'élément fonctionnel de masquage 60 comporte une feuille ou support par exemple de 100µm, notamment polymère par exemple PET, ou UTG, transparente à la longueur d'onde de travail du LIDAR avec une première face principale côté face F2 61 et avec une deuxième face principale côté face F3 62.

La première face 61 (alternativement la deuxième face principale 62) est porteuse d'un revêtement de camouflage opaque dans le visible 63 et transparent à la longueur d'onde de travail. Ce revêtement de camouflage sert alors aussi à masquer le LIDAR et le boitier 8.

En variante, la première face 61 (alternativement la deuxième face principale 62) est porteuse d'un revêtement opaque dans le visible et à la longueur d'onde de travail pourvu d'une épargne trapézoïdale (en variante rectangulaire ou toute autre forme) au droit du trou traversant 4.

L'insert 60 peut être porteur de capteur (antenne etc) d'écran luminescent notamment sur la face 62 côté F3. Le revêtement de camouflage opaque 63, l'insert opaque 60 peut alors comporter une ou des épargnes pour ces capteurs.

En variante l'insert opaque 60 est opaque en masse (sans revêtement de camouflage) et peut alors comporter une ou des épargnes ou une ou des zones transparentes en masse.

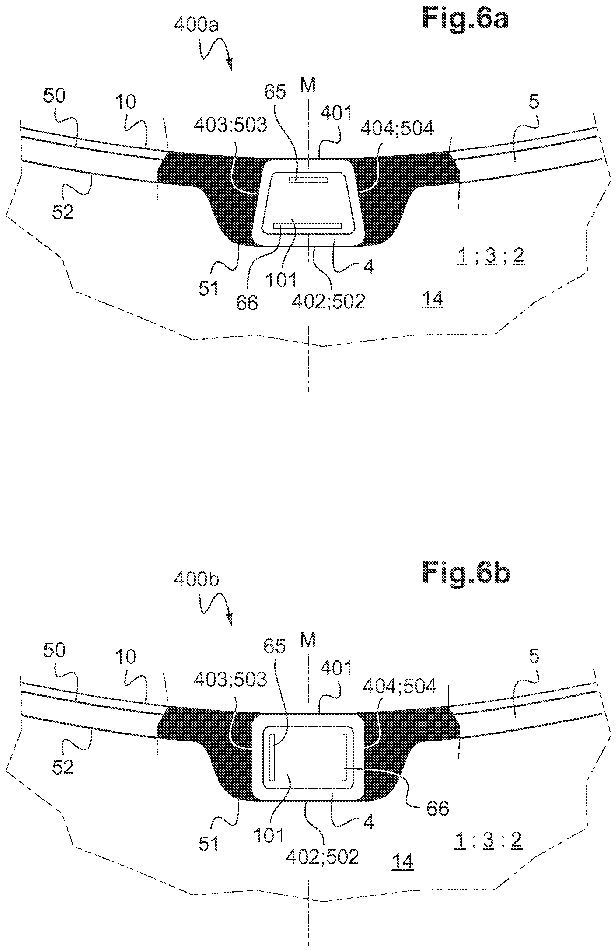

La figure 6a schématise en vue de coupe un pare-brise 400a selon l'invention avec un système de vision infrarouge tel qu'un LIDAR dans un quatrième mode de réalisation de l'invention.

La figure 6b schématise en vue de coupe un pare-brise 400b selon l'invention avec un système de vision infrarouge tel qu'un LIDAR dans une variante du quatrième mode de réalisation de l'invention.

Comme montré en figure 6a et 6b, le trou traversant 4 est une encoche par exemple de forme trapézoidale (figure 6a) tout comme l'épargne dans la couche opaque 5 avec ses bords 502, 503,504 ou rectangulaire (figure 6b)) tout comme l'épargne dans la couche opaque 5 avec ses bords haut et bas 502, latéraux 503, 504.

Le trou traversant débouchant est de préférence côté toit (sur le bord longitudinal supérieur 10). Le trou traversant 4 a ici des coins arrondis.

Le trou traversant 4 débouchant peut être dans une autre région du pare-brise 100 ou même dans un autre vitrage du véhicule en particulier la lunette arrière.

Par exemple les bus bars 65, 66 sur la pièce sont horizontaux (figure 6a) ou verticaux (figure 6b).

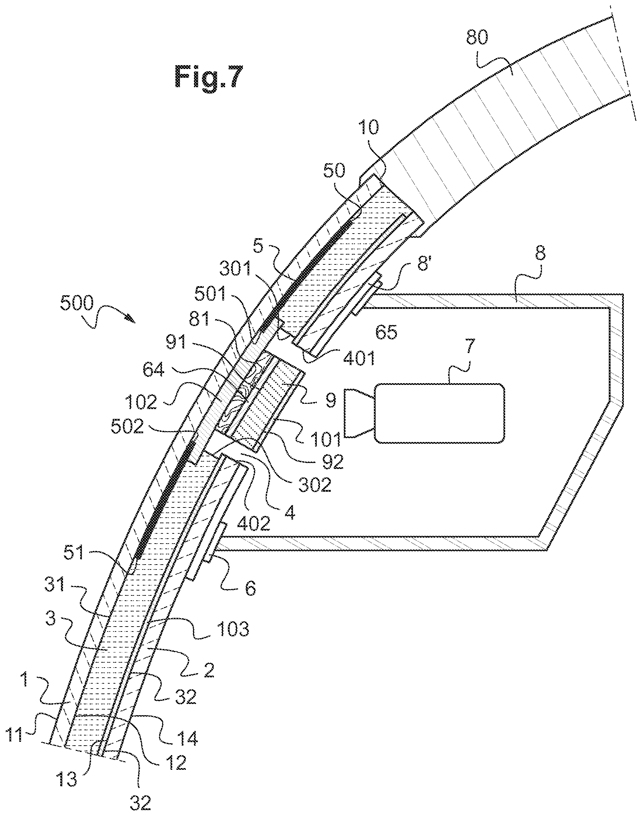

La figure 7 schématise en vue de coupe un pare-brise 500 selon l'invention avec un système de vision infrarouge tel qu'un LIDAR dans un cinquième mode de réalisation de l'invention.

Seules les différences avec le premier mode sont explicitées ci-après.

Dans un exemple d'intégration, l'intercalaire de feuilletage PVB présente un trou traversant d'intercalaire de forme homothétique au trou traversant 4 par exemple trapézoïdale ou rectangulaire, par exemple un peu plus large, avec des parois longitudinales haute et basses 301, 302 sous le trou traversant.

La pièce 9 est en contact adhésif avec un film de liaison 81 qui peut être en matière identique ou distincte du PVB et/ou d'épaisseur identique ou distincte du PVB troué. Le film de liaison 81 permet de coller la pièce 9 sur la face F2 avec le revêtement de camouflage 102.

Apres feuilletage, le film de liaison 81 peut ne pas être forcément discernable dudit feuillet PVB (et formant une continuité de PVB par fluage, ses bords étant en contact avec les bords 301 et 302).

La pièce 9 est transparente. Elle comporte le revêtement chauffant 64 (avec des bus bars périphériques par exemple latéraux) sur la surface de liaison 91 plutôt que sur un support additionnel.

En variante le trou d'intercalaire est partiel et on peut supprimer le film de liaison.

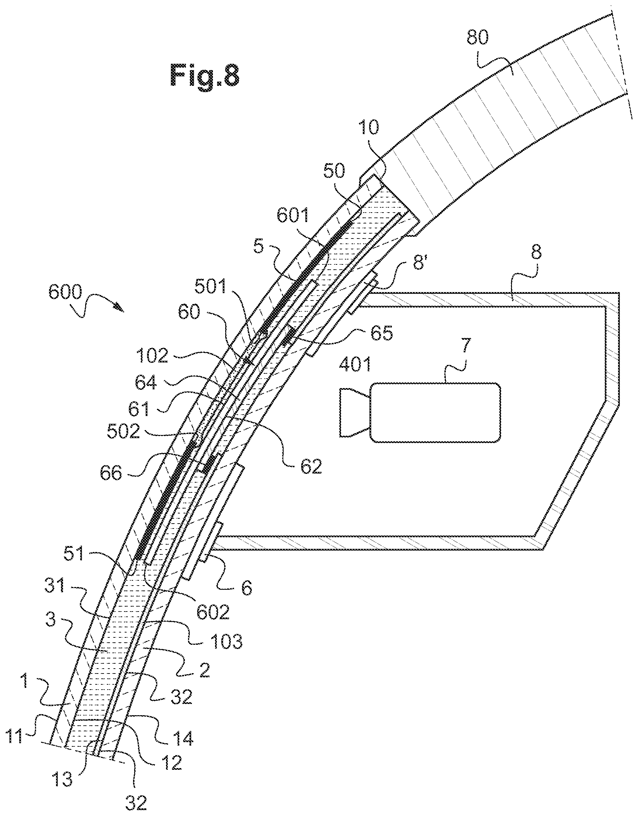

La figure 8 schématise en vue de coupe un pare-brise 600 selon l'invention, avec un système de vision infrarouge tel qu'un LIDAR dans un sixième mode de réalisation de l'invention.

Seules les différences avec le premier mode sont explicitées ci-après.

La deuxième feuille de verre 2 est en verre extraclair et est dépourvu de trou traversant dans la zone de transmission infrarouge.

Eventuellement un revêtement antireflet est sur la face F4 14 dans cette zone.

La couche conductrice 103 de contrôle solaire ou basse émissivité, éventuellement chauffante, notamment en particulier un empilement à l'argent est pourvue d'une épargne dans la zone de transmission infrarouge.

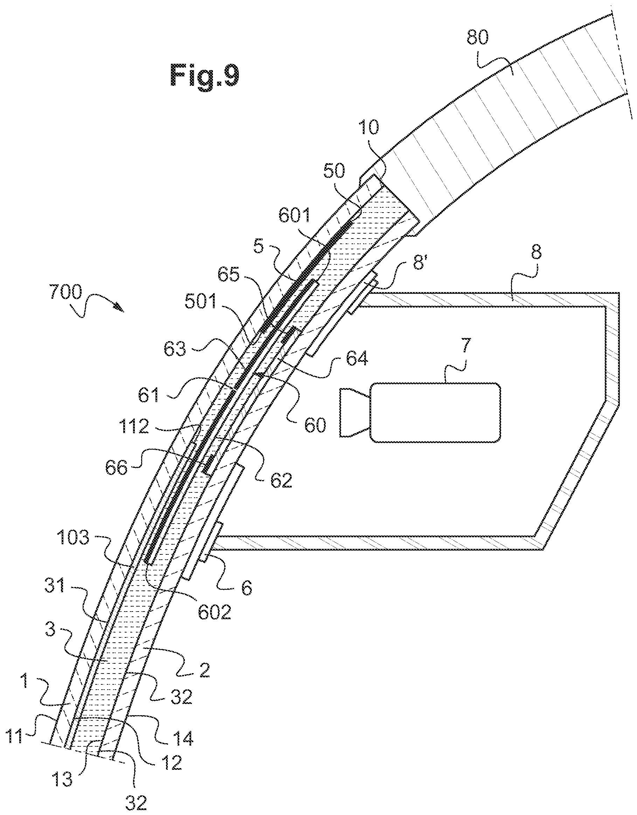

La figure 9 schématise en vue de coupe un pare-brise 700 selon l'invention, avec un système de vision infrarouge tel qu'un LIDAR dans un septième mode de réalisation de l'invention.

Seules les différences avec le dernier mode sont explicitées ci-après.

Le revêtement chauffant 64 est sur la face F3 et non sur le support mince 60 qui est lui porteur d'un revêtement de camouflage 63 (comme pour le troisième mode de réalisation).

**Revendications**

**1.** Vitrage de véhicule (100 à 700), notamment routier ou ferroviaire, en particulier pare-brise, lunette arrière, en particulier bombé, d'épaisseur donnée, comportant une première feuille de verre (1) destinée à être le vitrage extérieur avec une première face principale externe F1 (11) et une deuxième face principale interne F2 (12) orientée vers l'habitacle,

au moins une première zone, dite zone de transmission infrarouge, dudit vitrage étant transparente à une longueur d'onde dite de travail dans l'infrarouge dans une gamme allant de 800nm à 1800nm **caractérisé en ce que** dans ladite zone de transmission infrarouge, le vitrage comporte, à l'opposé de la face F1, un revêtement chauffant comportant une couche chauffante (64) en matériau électroconducteur transparent à ladite longueur d'onde dite de travail qui est un oxyde transparent conducteur comportant un oxyde d'indium et un autre métal choisi parmi le molybdène et le titane, autre métal éventuellement à l'état oxydé, et **en ce que** dans la zone de transmission infrarouge avec la couche chauffante, le vitrage présente une transmission totale infrarouge d'au moins 70% à la longueur d'onde de travail.

2. Vitrage de véhicule (100 à 700) selon la revendication précédente **caractérisé en ce que** l'épaisseur de la couche chauffante (64) est d'au plus 150nm et la résistivité est d'au plus 500$\mu$ohm.cm.

3. Vitrage de véhicule (100 à 700) selon l'une des revendications précédentes **caractérisé en ce que** la couche chauffante (64) est définie par une puissance surfacique d'au moins 100W/m$^2$ et même d'au plus 2000 ou 1000 W/m$^2$ de préférence dans une gamme allant de 200 à 700 W/m$^2$, en particulier avec une tension appliquée est d'au plus 400V et même d'au plus 120V ou 50V.

4. Vitrage de véhicule (100 à 700) selon l'une des revendications précédentes **caractérisé en ce que** pour la couche chauffante, le pourcentage en poids d'oxyde d'indium est d'au moins 90% du poids total et de préférence d'au plus 98%, le pourcentage en poids de molybdène et/ou d'oxyde de molybdène, de titane et/ou d'oxyde de titane est de préférence d'au moins 2% et de préférence d'au plus 10% ou 5%.

5. Vitrage de véhicule (100 à 700) selon l'une des revendications précédentes **caractérisé en ce que** le revêtement chauffant (64) est sur un substrat choisi parmi :

- la première feuille de verre, sur la face F2, le vitrage étant monolithique
- ou le vitrage étant feuilleté et comprend côté face F2 un intercalaire de feuilletage et une deuxième feuille de verre:

- la deuxième feuille de verre, de préférence sur une face principale F3 en vis-à-vis de la face F2 transparente à la longueur d'onde de travail
- un film (60) notamment submillimétrique, au sein de l'intercalaire de feuilletage, transparent à la longueur d'onde de travail, film éventuellement dépassant tout ou partie de la zone de transmission infrarouge
- une pièce (9) transparente à la longueur d'onde de travail, sur une face principale de préférence en vis-à-vis de la face F2, qui est dans un trou traversant de la deuxième feuille de verre dans la zone de transmission infrarouge, en particulier pièce sur l'intercalaire de feuilletage ou collée sur la face F2, l'intercalaire de feuilletage étant troué par un trou traversant d'intercalaire au droit dudit trou traversant
- la première feuille de verre, sur la face F2, l'intercalaire de feuilletage étant troué par un trou traversant d'intercalaire au droit d'un trou traversant de la deuxième feuille de verre.

6. Vitrage de véhicule (100 à 700) selon la revendication précédente **caractérisé en ce que** le film (60) est en verre notamment extraclair et/ou trempé ou recuit en particulier d'épaisseur d'au plus 0,3mm, ou la pièce (9) est un verre en particulier d'épaisseur d'au plus 2,2mm et même d'au plus 1,1mm et même d'au moins 0,1mm ou 0,3mm, notamment extraclair et/ou verre trempé ou recuit, en particulier la couche chauffante est également trempée ou recuite.

7. Vitrage de véhicule selon l'une des revendications précédentes **caractérisé en ce que** le revêtement chauffant comporte un empilement de couches suivant : au moins une sous couche d'oxy et/ou nitrure de métal ou de silicium sous jacente à la couche chauffante, et/ou au moins une surcouche d'oxy et/ou nitrure de métal ou de silicium sur la couche chauffante.

8. Vitrage de véhicule (100 à 700) selon l'une des revendications précédentes **caractérisé en ce que** la couche chauffante (64) présente au moins deux bus bars (65, 66), de préférence sur deux côtés opposés de la couche chauffante, et masqués de l'extérieur par :

- une couche de masquage opaque dans le visible et à la longueur d'onde de travail, décalée de la zone de transmission infrarouge au moins dans une région centrale de la zone de transmission infrarouge,
- et/ou par un filtre sélectif de camouflage opaque dans le visible et transparent à la longueur d'onde de travail présent dans la zone de transmission infrarouge et éventuellement dépassant de ladite zone de transmission infrarouge, notamment un revêtement de camouflage sur la face F2, plus vers l'extérieur que les deux bus bars, les deux bus bars étant de préférence décalés de la zone de transmission infrarouge au moins dans la zone centrale.

9. Vitrage de véhicule (100 à 700) selon l'une des revendications précédentes **caractérisé en ce que** la couche chauffante (64) présente au moins deux bus bars (65, 66), de préférence sur deux côtés opposés de la couche chauffante, décalés de la zone de transmission infrarouge, notamment lorsque le vitrage est feuilleté et comprenant côté face F2 un intercalaire de feuilletage et une deuxième feuille de verre qui éventuellement est trouée dans la zone de transmission infrarouge, les bus bars sont sous la deuxième feuille de verre notamment décalés du trou traversant.

10. Vitrage de véhicule (100 à 700) selon l'une des revendications précédentes **caractérisé en ce que** dans la zone de transmission infrarouge avec le revêtement chauffant, il comporte côté face F2 un filtre sélectif de camouflage (102), absorbant dans le visible et transparent à la longueur d'onde de travail, le vitrage présentant alors une transmission totale d'au plus 10,0%, 5,0%, ou 1,0% ou 0,5% dans le visible notamment au moins à une valeur de référence dans une gamme de 400nm à 700nm.

11. Vitrage de véhicule (100 à 700) selon la revendication précédente **caractérisé en ce que** le filtre sélectif est un revêtement de camouflage (102) sur la face F2 (12) ou, le vitrage étant feuilleté et comprenant côté face F2 un intercalaire de feuilletage et une deuxième feuille de verre avec une face principale F3 orienté vers la face F2 et une face F4 orientée vers l'habitacle, le revêtement de camouflage sur un film submilllimétrique (60) au sein de l'intercalaire de feuilletage, et même le filtre sélectif sur la face F2 ou sur le film dépasse sous la face F3 (13), et **en ce que** le revêtement chauffant est notamment distant de la face F2, éventuellement sur ledit film submilllimétrique au sein de l'intercalaire de feuilletage avec éventuellement le revêtement de camouflage.

12. Vitrage de véhicule (100 à 700) selon l'une des revendications précédentes **caractérisé en ce que** dans la zone de transmission infrarouge avec le revêtement chauffant, le vitrage comporte côté face F2 un élément antireflet (101) à ladite longueur d'onde de travail, le vitrage avec ledit élément antireflet (101) présente une transmission totale d'au moins 75% ou 80% à la longueur d'onde de travail, et **en ce qu'**en particulier le vitrage étant feuilleté et comprenant côté face F2 un intercalaire de feuilletage et une deuxième feuille de verre avec une face principale F3 orienté vers la face F2 et une face F4 orientée vers l'habitacle l'élément antireflet est sur une pièce dans un trou traversant de la deuxième feuille de verre ou sur la face F4.

13. Vitrage de véhicule (100 à 700) selon la revendication précédente **caractérisé en ce que** l'élément antireflet (101) à ladite longueur d'onde de travail est un revêtement antireflet, notamment couche de silice poreuse en particulier sur la face F4 ou sur la pièce.

14. Vitrage de véhicule (100 à 700) selon l'une des revendications précédentes **caractérisé en ce que** le vitrage est feuilleté et comprend :

- un intercalaire de feuilletage (3) en matière polymère avec une face principale Fa orienté vers F2 (31) et avec une face principale Fb opposée à Fa (32), notamment PVB
- une deuxième feuille de verre (2) destinée à être le vitrage intérieur avec une troisième face principale F3 (13) côté F2 et une quatrième face principale F4 (14) interne orientée vers l'habitacle.

15. Dispositif **caractérisé en ce qu'**il comprend :

- ledit vitrage (100 à 700) selon l'une des revendications précédentes
- un système de détection infrarouge à la longueur d'onde de travail dans l'infrarouge disposé dans l'habitacle et comportant un émetteur et/ou récepteur (7), de façon à envoyer et/ou recevoir un rayonnement traversant la première feuille de verre au niveau de la zone de transmission infrarouge.

16. Dispositif selon la revendication précédente **caractérisé en ce que** le système de détection infrarouge est un LIDAR ou une caméra proche infrarouge.

**Patentansprüche**

1. Kraftfahrzeugverglasung (100 bis 700), insbesondere für ein Straßen- oder Eisenbahnfahrzeug, insbesondere eine Windschutzscheibe, Heckscheibe, insbesondere gewölbt, mit vorgegebener Dicke, die eine erste Glasscheibe (1) aufweist, die dazu bestimmt ist, die Außenverglasung zu sein, mit einer ersten Hauptaußenfläche F1 (11), und einer zweiten Hauptinnenfläche F2 (12), die zu dem Fahrgastraum gerichtet ist,

   mindestens eine erste Zone, Infrarotübertragungszone genannt, der Verglasung, die bei einer sogenannten Arbeitswellenlänge in dem Infrarotbereich in einer Bandbreite von 800 nm bis 1800 nm transparent ist, **dadurch gekennzeichnet, dass** in der Infrarotübertragungszone die Verglasung gegenüber der Fläche F1 eine Heizbeschichtung aufweist, die eine Heizschicht (64) aus elektrisch leitendem Material aufweist, das bei der sogenannten Arbeitswellenlänge transparent ist, das ein transparentes leitendes Oxid ist, das ein Indiumoxid und ein anderes Metall aufweist, das aus Molybdän und Titan ausgewählt ist, wobei das andere Metall gegebenenfalls in dem oxidierten Zustand ist, und **dass** in der Infrarotübertragungszone mit der Heizschicht die Verglasung bei der Arbeitswellenlänge eine Gesamtinfrarotübertragung von mindestens 70 % vorweist.

2. Kraftfahrzeugverglasung (100 bis 700) nach dem vorstehenden Anspruch, **dadurch gekennzeichnet, dass** die Dicke der Heizschicht (64) höchstens 150 nm beträgt und der spezifische Widerstand höchstens 500 $\mu$ohm.cm beträgt.

3. Kraftfahrzeugverglasung (100 bis 700) nach einem der vorstehenden Ansprüche, **dadurch gekennzeichnet, dass** die Heizschicht (64) durch eine Oberflächenleistung von mindestens 100 W/m$^2$ und sogar höchstens 2000 oder 1000 W/m$^2$, vorzugsweise in einer Bandbreite von 200 bis 700 W/m$^2$ definiert ist, insbesondere mit einer angelegten Spannung von höchstens 400 V und sogar höchstens 120 V oder 50 V.

4. Kraftfahrzeugverglasung (100 bis 700) nach einem der vorstehenden Ansprüche, **dadurch gekennzeichnet, dass** für die Heizschicht der Gewichtsanteil von Indiumoxid mindestens 90 % des Gesamtgewichts und vorzugsweise höchstens 98 % beträgt, der Gewichtsanteil von Molybdän und/oder Molybdänoxid, von Titan und/oder Titanoxid vorzugsweise mindestens 2 % und vorzugsweise höchstens 10 % oder 5 % beträgt.

5. Kraftfahrzeugverglasung (100, 700) nach einem der vorstehenden Ansprüche, **dadurch gekennzeichnet, dass** die Heizbeschichtung (64) ein Substrat ist, das ausgewählt ist aus:

   - der ersten Glasscheibe auf der Fläche F2, wobei die Verglasung monolithisch ist
   - oder der Verglasung, die laminiert ist und auf der Seite von Fläche F2 eine Verbundzwischenlage und eine zweite Glasscheibe umfasst:
   - die zweite Glasscheibe, die vorzugsweise auf einer Hauptfläche F3 gegenüber der Fläche F2 bei der Arbeitswellenlänge transparent ist
   - eine Folie (60), insbesondere im Submillimeterbereich, innerhalb der Verbundzwischenlage, die bei der Arbeitswellenlänge transparent ist, wobei die Folie gegebenenfalls die gesamte oder einen Teil der Infrarotübertragungszone überragt
   - ein Stück (9), das bei der Arbeitswellenlänge transparent ist, auf einer Hauptfläche vorzugsweise gegenüber der Fläche F2, die in einem Durchgangsloch der zweiten Glasscheibe in der Infrarotübertragungszone ist, wobei insbesondere das Stück auf der Verbundzwischenlage liegt oder auf die Fläche F2 geklebt ist, wobei die Verbundzwischenlage durch ein Durchgangsloch der Zwischenlage direkt unter dem Durchgangsloch durchlöchert ist
   - die erste Glasscheibe auf der Fläche F2, wobei die Verbundzwischenlage durch ein Durchgangsloch der Zwischenlage direkt unter einem Durchgangsloch der zweiten Glasscheibe durchlöchert ist.

6. Kraftfahrzeugverglasung (100 bis 700) nach dem vorstehenden Anspruch, **dadurch gekennzeichnet, dass** die Folie (60) aus Glas ist, das insbesondere extraklar und/oder vorgespannt oder vergütet ist, insbesondere mit einer Dicke von höchstens 0,3 mm, oder das Stück (9) ein Glas ist, insbesondere mit einer Dicke von höchstens 2,2 mm und sogar höchstens 1,1 mm und sogar mindestens 0,1 mm oder 0,3 mm, das insbesondere extraklar und/oder vorgespannt oder vergütet ist, wobei insbesondere die Heizschicht auch vorgespannt oder vergütet ist.

7. Kraftfahrzeugverglasung nach einem der vorstehenden Ansprüche, **dadurch gekennzeichnet, dass** die Heizbeschichtung einen folgenden Schichtenstapel aufweist: mindestens eine Unterschicht aus Oxy und/oder Metall- oder Siliziumnitrid, die unter der Heizschicht liegt, und/oder mindestens eine Oberschicht aus Oxy und/oder Metall- oder Siliziumnitrid auf der Heizschicht.

8. Kraftfahrzeugverglasung (100 bis 700) nach einem der vorstehenden Ansprüche, **dadurch gekennzeichnet, dass** die Heizschicht (64) mindestens zwei Sammelschienen (65, 66) vorweist, vorzugsweise auf zwei gegenüberliegenden Seiten der Heizschicht, und die von außen abgedeckt sind durch:

   - eine Deckschicht, die in dem sichtbaren Bereich und bei der Arbeitswellenlänge undurchsichtig ist, die mindestens in einer zentralen Region der Infrarotübertragungszone von der Infrarotübertragungszone versetzt ist,
   - und/oder durch einen selektiven Tarnfilter, der in dem sichtbaren Bereich undurchsichtig und bei der Arbeitswellenlänge transparent ist, der in der Infrarotübertragungszone vorhanden ist und gegebenenfalls die Infrarotübertragungszone überragt, insbesondere eine Tarnbeschichtung auf der Fläche F2, weiter außen als die zwei Sammelschienen, wobei die zwei Sammelschienen vorzugsweise mindestens in der mittleren Zone von der Infrarotübertragungszone versetzt sind.

9. Kraftfahrzeugverglasung (100 bis 700) nach einem der vorstehenden Ansprüche, **dadurch gekennzeichnet, dass** die Heizschicht (64) mindestens zwei Sammelschienen (65, 66) vorweist, vorzugsweise auf zwei gegenüberliegenden Seiten der Heizschicht, die von der Infrarotübertragungszone versetzt sind, insbesondere wenn die Verglasung laminiert ist und auf der Seite von Fläche F2 eine Verbundzwischenlage und eine zweite Glasscheibe umfasst, die gegebenenfalls in der Infrarotübertragungszone durchlöchert ist, wobei die Sammelschienen unter der zweiten Glasscheibe sind, insbesondere von dem Durchgangsloch versetzt.

10. Kraftfahrzeugverglasung (100 bis 700) nach einem der vorstehenden Ansprüche, **dadurch gekennzeichnet, dass** sie in der Infrarotübertragungszone mit der Heizbeschichtung auf der Fläche F2 einen selektiven Tarnfilter (102) aufweist, der in dem sichtbaren Bereich absorbiert und bei der Arbeitswellenlänge transparent ist, wobei die Verglasung dann eine Gesamtübertragung von höchstens 10,0 %, 5,0 % oder 1,0 % oder 0,5 % in dem sichtbaren Bereich vorweist, insbesondere mindestens bei einem Referenzwert in einer Bandbreite von 400 nm bis 700 nm.

11. Kraftfahrzeugverglasung (100 bis 700) nach dem vorstehenden Anspruch, **dadurch gekennzeichnet, dass** der selektive Filter eine Tarnbeschichtung (102) auf der Fläche F2 (12) ist oder die Verglasung laminiert ist und auf der Seite von Fläche F2 eine Verbundzwischenlage und eine zweite Glasscheibe mit einer Hauptseite F3, die zu der Fläche F2 gerichtet ist, und eine Fläche F4 umfasst, die zu dem Fahrgastraum gerichtet ist, wobei die Tarnbeschichtung auf einer submillimetrischen Folie (60) innerhalb der Verbundzwischenlage und sogar der selektive Filter auf der Fläche F2 oder auf der Folie unter der Fläche F3 (13) hervorragt, und **dass** die Heizbeschichtung insbesondere entfernt von der Fläche F2, gegebenenfalls auf der submillimetrischen Folie innerhalb der Verbundzwischenlage mit gegebenenfalls der Tarnbeschichtung liegt.

12. Kraftfahrzeugverglasung (100 bis 700) nach einem der vorstehenden Ansprüche, **dadurch gekennzeichnet, dass** in der Infrarotübertragungszone mit der Heizbeschichtung die Verglasung auf der Seite von Fläche F2 ein Element (101) aufweist, das bei der Arbeitswellenlänge entspiegelnd ist, wobei die Verglasung mit dem Entspiegelungselement (101) eine Gesamtübertragung von mindestens 75 % oder 80 % bei der Arbeitswellenlänge vorweist, und **dass** insbesondere die Verglasung laminiert ist und auf der Seite von Fläche F2 eine Verbundzwischenlage und eine zweite Glasscheibe mit einer Hauptfläche F3, die zu der Fläche F2 gerichtet ist, und einer Fläche F4, die zu dem Fahrgastraum gerichtet ist, umfasst, wobei auf dem Entspiegelungselement ein Stück in einem Durchgangsloch der zweiten Glasscheibe oder auf der Fläche F4 liegt.

13. Kraftfahrzeugverglasung (100 bis 700) nach dem vorstehenden Anspruch, **dadurch gekennzeichnet, dass** das Entspiegelungselement (101) bei der Arbeitswellenlänge eine Entspiegelungsbeschichtung ist, insbesondere eine Schicht aus porösem Siliziumdioxid, insbesondere auf der Fläche F4 oder auf dem Stück.

14. Kraftfahrzeugverglasung (100 bis 700) nach einem der vorstehenden Ansprüche, **dadurch gekennzeichnet, dass** die Verglasung laminiert ist und umfasst:

   - eine Verbundzwischenlage (3) aus Polymermaterial mit einer Hauptfläche Fa, die zu F2 (31) gerichtet ist, und mit einer Hauptfläche Fb, die Fa (32) gegenüberliegt, insbesondere PVB
   - eine zweite Glasscheibe (2), die dazu bestimmt ist, die Innenverglasung zu sein, mit einer dritten Hauptfläche F3 (13) auf der Seite von F2 und einer vierten Hauptfläche F4 (14) im Inneren von F2, die zu dem Fahrgastraum gerichtet ist.

15. Vorrichtung, **dadurch gekennzeichnet, dass** sie umfasst:

- die Verglasung (100 bis 700) nach einem der vorstehenden Ansprüche
- ein System zum Erfassen von Infrarot bei der Arbeitswellenlänge in dem Infrarotbereich, das in dem Fahrgastraum angeordnet ist und einen Sender und/oder Empfänger (7) umfasst, um eine Strahlung zu senden und/oder zu empfangen, die durch die erste Glasscheibe an der Infrarotübertragungszone verläuft.

16. Vorrichtung nach dem vorstehenden Anspruch,
**dadurch gekennzeichnet, dass** das Infraroterfassungssystem eine LIDAR- oder Nahinfrarotkamera ist.

**Claims**

1. A vehicle glazed unit (100 to 700), particularly for a road or rail vehicle, in particular a windshield, rear window, in particular curved, of given thickness, comprising a first glass sheet (1) intended to be the outer glazing with a first external main face F1 (11) and a second internal main face F2 (12) oriented towards the passenger compartment,

at least one first zone, called the infrared transmission zone, of said glazed unit being transparent to a wavelength called the working wavelength in the infrared in a range from 800 nm to 1800 nm
**characterized in that**, in said infrared transmission zone, the glazed unit comprises, opposite face F1, a heating coating comprising a heating layer (64) made of an electrically conductive material which is transparent to said so-called working wavelength and which is a transparent conductive oxide comprising an indium oxide and another metal chosen from molybdenum and titanium, the other metal optionally being in the oxidized state,
and **in that** in the infrared transmission zone with the heating layer, the glazed unit has a total infrared transmission of at least 70% at the working wavelength.

2. The vehicle glazed unit (100 to 700) according to the preceding claim, **characterized in that** the thickness of the heating layer (64) is at most 150 nm and the resistivity is at most 500 $\mu$ohm.cm.

3. The vehicle glazed unit (100 to 700) according to one of the preceding claims, **characterized in that** the heating layer (64) is defined by a power density of at least 100 W/m$^2$ and even of at most 2000 or 1000 W/m$^2$ preferably in a range from 200 to 700 W/m$^2$, in particular with an applied voltage of at most 400V and even of at most 120V or 50V.

4. The vehicle glazed unit (100 to 700) according to one of the preceding claims, **characterized in that** for the heating layer, the percentage by weight of indium oxide is at least 90% of the total weight and preferably at most 98%, the percentage by weight of molybdenum and/or molybdenum oxide, titanium and/or titanium oxide is preferably at least 2% and preferably at most 10% or 5%.

5. The vehicle glazed unit (100 to 700) according to one of the preceding claims, **characterized in that** the heating coating (64) is on a substrate selected from:

- the first glass sheet, on face F2, the glazed unit being monolithic
- or the glazed unit being laminated and comprises on face F2 side, a lamination interlayer and a second glass sheet:

- the second glass sheet, preferably on a main face F3 facing face F2 transparent to the working wavelength
- a film (60), in particular a submillimeter film, within the lamination interlayer, which is transparent to the working wavelength, and which may extend over all or some of the infrared transmission zone
- a piece (9) transparent to the working wavelength, on a main face preferably facing face F2, which is in a through-hole of the second glass sheet in the infrared transmission zone, in particular a piece on the lamination interlayer or glued to face F2, the lamination interlayer being perforated by an interlayer through-hole in line with said through-hole
- the first glass sheet, on face F2, the lamination interlayer being perforated by an interlayer through-hole in line with a through-hole of the second glass sheet.

6. The vehicle glazed unit (100 to 700) according to the preceding claim, **characterized in that** the film (60) is made of glass, in particular extra-clear and/or tempered or annealed glass, in particular with a thickness of no more than 0.3 mm, or the piece (9) is a glass in particular with a thickness of no more than 2.2 mm, and even no more than 1.1 mm, and even no less than 0.1 mm or 0.3 mm, particularly extra-clear and/or tempered or annealed glass, in particular the heating layer is also tempered or annealed.

7. The vehicle glazed unit according to one of the preceding claims, **characterized in that** the heating coating comprises a stack of layers as follows: at least one underlayer of oxy and/or metal or silicon nitride underlying the heating layer, and/or at least one overlayer of oxy and/or metal or silicon nitride on the heating layer.

8. The vehicle glazed unit (100 to 700) according to one of the preceding claims, **characterized in that** the heating layer (64) has at least two busbars (65, 66), preferably on two opposite sides of the heating layer, and hidden from the outside by:

- a masking layer opaque in the visible spectrum and at the working wavelength, offset from the infrared transmission zone at least in a central region of the infrared transmission zone,
- and/or by a selective camouflage filter, opaque in the visible spectrum and transparent to the working wavelength present in the infrared transmission zone and possibly protruding from said infrared transmission zone, particularly a camouflaging coating on face F2, more towards the outside than the two busbars, the two busbars preferably being offset from the infrared transmission zone at least in the central zone.

9. The vehicle glazed unit (100 to 700) according to one of the preceding claims, **characterized in that** the heating layer (64) has at least two busbars (65, 66), preferably on two opposite sides of the heating layer, offset from the infrared transmission zone, particularly when the glazed unit is laminated and comprising, on the face F2 side, a lamination interlayer and a second glass sheet which potentially is perforated in the infrared transmission zone, the busbars are under the second glass sheet, particularly offset from the through-hole.

10. The vehicle glazed unit (100 to 700) according to one of the preceding claims, **characterized in that** in the infrared transmission zone with the heating coating it comprises, on the face F2 side a selective camouflage filter (102) which absorbs in the visible spectrum and is transparent to the working wavelength, the glazed unit then having a total transmission of at most 10.0%, 5.0%, or 1.0% or 0.5% in the visible spectrum, particularly at least at a reference value in a range of 400 nm to 700 nm.

11. The vehicle glazed unit (100 to 700) according to the preceding claim, **characterized in that** the selective filter is a camouflaging coating (102) on face F2 (12) or, the glazed unit being laminated and comprising, on the face F2 side, a lamination interlayer and a second glass sheet with a main face F3 oriented towards face F2 and a face F4 oriented towards the passenger compartment, the camouflaging coating on a submillimeter film (60) within the lamination interlayer, and even the selective filter on face F2 or on the film projecting under face F3 (13), and **in that** the heating coating is notably distant from face F2, potentially on said submillimeter film within the lamination interlayer with potentially the camouflaging coating.

12. The vehicle glazed unit (100 to 700) according to one of the preceding claims, **characterized in that**, in the infrared transmission zone with the heating coating, the glazed unit comprises, on the face F2 side, an element (101) which is anti-reflective to said working wavelength, the glazed unit with said anti-reflective element (101) has a total transmission of at least 75% or 80% at the working wavelength and **in that**, in particular, the glazed unit being laminated and comprising, on the face F2 side, a lamination interlayer and a second glass sheet with a main face F3 oriented towards face F2 and a face F4 oriented towards the passenger compartment, the anti-reflective element is on a piece in a through-hole of the second glass sheet or on face F4.

13. The vehicle glazed unit (100 to 700) according to the preceding claim, **characterized in that** the anti-reflective element (101) to said working wavelength is an anti-reflective coating, particularly a porous silica layer, in particular on face F4 or on the piece.

14. The vehicle glazed unit (100 to 700) according to one of the preceding claims, **characterized in that** the glazed unit is laminated and comprises:

- a lamination interlayer (3) made of polymer material with a main face Fa oriented toward F2 (31) and with a main face Fb opposite Fa (32), particularly PVB
- a second glass sheet (2) intended to be the interior glazed unit with a third main face F3 (13) on the F2 side and a fourth internal main face F4 (14) oriented toward the passenger compartment.

15. A device, **characterized in that** it comprises:

- said glazed unit (100 to 700) according to one of the preceding claims
- an infrared detection system at the working wavelength in the infrared, arranged in the passenger compartment and comprising a transmitter and/or receiver (7), so as to transmit and/or receive radiation passing through the first glass sheet at the infrared transmission zone.

16. The device according to the previous claim **characterized in that** the infrared detection system is a LIDAR or a near-infrared camera.

# Fig.1

Fig.2

EP 4 313 587 B1

Fig.3

**Fig.4**

**Fig.5**

EP 4 313 587 B1

**Fig.6a**

**Fig.6b**

Fig.7

# Fig.8

# Fig.9

## RÉFÉRENCES CITÉES DANS LA DESCRIPTION

**Documents brevets cités dans la description**

- WO 2021053138 A1
- WO 20180153012 A
- WO 9307329 A
- US 5162046 A
- WO 2021004685 A
- WO 2008059170 A
- WO 2014128016 A
- WO 2018015312 A
- WO 2018178278 A
- US 6132882 A
- WO 04025334 A